# EUROPEAN PATENT APPLICATION

(11) **EP 4 804 397 A1**
(43) Date of publication of application: **09.09.2026**
(21) Application number: 24892723.8
(22) Date of filing: 27.05.2024
(51) Int. Cl.: H02M 7/5387, H02M 1/088, H02J 3/38

(54) **POWER CONVERTER AND THREE-PHASE FOUR-LEG INVERTER CIRCUIT MODULATION METHOD**

(30) Priority: 22.11.2023 CN 202311572905; 01.02.2024 CN 202410156981
(71) Applicant: Huawei Digital Power Technologies Co., Ltd., Shenzhen, Guangdong 518043 (CN)
(72) Inventor: DU, Yi, Shenzhen, Guangdong 518043 (CN); YU, Xinyu, Shenzhen, Guangdong 518043 (CN); YAO, Yuan, Shenzhen, Guangdong 518043 (CN); XIN, Kai, Shenzhen, Guangdong 518043 (CN)
(74) Representative: Epping - Hermann - Fischer
(86) International application number: PCT/CN2024/095608
(87) International publication number: WO 2025/107558

(57) **Abstract**

A power converter and a modulation method for a three-phase four-bridge-arm inverter circuit are provided. An inverter includes the three-phase four-bridge-arm inverter circuit and a controller. The controller is configured to: when an absolute value of an instantaneous value of a modulation signal of a bridge arm N is greater than a first effective modulus value, inject a common mode signal into the bridge arm N in a unipolar manner; or when an absolute value of an instantaneous value of a modulation signal of a bridge arm N is less than a second effective modulus value, inject a common mode signal is into the bridge arm N in a bipolar manner, so that a loss of a modulation signal of the bridge arm N can be prevented, a switching loss of a main bridge arm can be reduced, and quality of electric energy output by the power converter can be improved.

## Description

This application claims priorities to Chinese Patent Application No. 202311572905.1, filed with the China National Intellectual Property Administration on November 22, 2023 and entitled "INVERTER AND MODULATION METHOD FOR THREE-PHASE FOUR-BRIDGE-ARM INVERTER CIRCUIT", and to Chinese Patent Application No. 202410156981.2, filed with the China National Intellectual Property Administration on February 1, 2024 and entitled "INVERTER AND MODULATION METHOD FOR THREE-PHASE FOUR-BRIDGE-ARM INVERTER CIRCUIT", which are incorporated herein by reference in their entireties.

### TECHNICAL FIELD

This application relates to the field of power electronic technologies, and in particular, to a power converter and a modulation method for a three-phase four-bridge-arm inverter circuit.

### BACKGROUND

A power converter is used in fields such as communication, vehicle electronic, a power grid, and a new energy vehicle. The power converter is an apparatus that can convert a current into another type of current.

For the power converter, especially a power converter using a three-phase four-bridge-arm inverter circuit, to reduce a switching loss and improve system efficiency, a discontinuous pulse width modulation (discontinuous pulse width modulation, DPWM) manner is usually used for a main bridge arm. However, if the main bridge arm uses the DPWM manner, when a modulation degree is high, because a modulus value of a common mode signal that needs to be injected is small, a modulation signal of a bridge arm N is easily lost due to a dead zone of a switching transistor or a minimum pulse. How to prevent the loss of the modulation signal of the bridge arm N and implement stable and effective DPWM control is an urgent problem to be resolved in three-phase four-bridge-arm inverter circuit.

### SUMMARY

This application provides a power converter and a modulation method for a three-phase four-bridge-arm inverter circuit, to reduce a switching loss and prevent loss of a modulation signal, and improve power output efficiency and power quality of the power converter.

According to a first aspect, a power converter is provided, including a three-phase four-bridge-arm inverter circuit and a controller, an input end of the three-phase four-bridge-arm inverter circuit is configured to connect to a direct current input, and an output end of the three-phase four-bridge-arm inverter circuit is configured to connect to a load; the three-phase four-bridge-arm inverter circuit includes three main bridge arms and a bridge arm N; the controller is configured to inject a common mode signal into the main bridge arm and the bridge arm N, so that the main bridge arm operates in a discontinuous state, where that the main bridge arm operates in the discontinuous state refers to that a switching transistor of the main bridge arm remains in an on state or an off state in a period of time of a main bridge arm modulation cycle, so that a bridge arm output voltage of the main bridge arm is clamped at a half of a direct current bus voltage in the period of time in the main bridge arm modulation cycle; and the controller is further configured to: when an absolute value of an instantaneous value of a modulation signal of the bridge arm N is greater than a first effective modulus value, inject a modulation signal into the bridge arm N in a unipolar manner; or when an absolute value of an instantaneous value of a modulation signal of the bridge arm N is less than a second effective modulus value, inject a modulation signal into the bridge arm N in a bipolar manner, where the first effective modulus value is greater than or equal to the second effective modulus value; or the controller is further configured to: when a modulation degree of the three-phase four-bridge-arm inverter circuit is greater than a first switching threshold, inject a modulation signal into the bridge arm N in a bipolar manner; or when a modulation degree of the three-phase four-bridge-arm inverter circuit is less than a second switching threshold, inject a modulation signal into the bridge arm N in a unipolar manner, where the first switching threshold is greater than or equal to the second switching threshold. The injecting the modulation signal into the bridge arm N in the unipolar manner refers to controlling a level output by the bridge arm N to change only between a positive level and a zero level in a half modulation cycle; or controlling a level output by the bridge arm N to change only between a negative level and a zero level in a half modulation cycle; and the injecting a modulation signal into the bridge arm N in a bipolar manner refers to: controlling the level output by the bridge arm N to change between the positive level, the negative level, and the zero level in the half modulation cycle.

The unipolar modulation manner is used when the modulation signal of the bridge arm N is large, and the bipolar modulation manner is used when the modulation signal of the bridge arm N is small, so that loss of the modulation signal of the bridge arm N caused by a modulation failure of the modulation signal of the bridge arm N can be effectively avoided. This avoids distortion of an output waveform of the power converter due to the loss of the modulation signal, and can effectively enable the main bridge arm to operate in the discontinuous state, thereby reducing a switching loss of a switching transistor of the main bridge arm.

In a possible implementation, the controller is configured to inject the common mode signal into the main bridge arm and the bridge arm N, so that the main bridge arm operates in a discontinuous state when an absolute value of an instantaneous value of a modulation signal of the main bridge arm is greater than or equal to a first threshold. DPWM modulation is performed near a wave peak, so that a modulus value of the common mode signal that needs to be injected is small, so that common mode oscillation can be effectively reduced.

In a possible implementation, the controller is configured to inject the common mode signal into the main bridge arm and the bridge arm N, so that the main bridge arm operates in the discontinuous state when the absolute value of the instantaneous value of the modulation signal of the main bridge arm is less than or equal to a second threshold and greater than or equal to a third threshold, where the second threshold is less than the first threshold, and the third threshold is greater than 0 and less than the second threshold.

DPWM modulation is performed near a half-wave peak, so that the modulus value of the common mode signal that needs to be injected is large, and the common mode signal may be injected more frequently in a unipolar modulation manner.

In a possible implementation, the controller is configured to: when the load is an unbalanced load, inject a zero sequence modulation signal into the bridge arm N; and the controller is configured to inject the common mode signal into the main bridge arm and the bridge arm N, so that the main bridge arm operates in the discontinuous state when the absolute value of the instantaneous value of the modulation signal of the main bridge arm is greater than a first zero sequence threshold.

In a possible implementation, the controller is configured to inject the common mode signal into the main bridge arm and the bridge arm N, so that the main bridge arm operates in the discontinuous state when the absolute value of the instantaneous value of the modulation signal of the main bridge arm is less than or equal to a second zero sequence threshold and greater than or equal to a third zero sequence threshold, where the second zero sequence threshold is less than the first zero sequence threshold, and the third zero sequence threshold is greater than 0 and less than the second zero sequence threshold.

In a possible implementation, the main bridge arm modulation cycle includes a moment t1, a moment t3, and a moment t5, where t1 is a start moment of the main bridge arm modulation cycle, t5 is an end moment of the main bridge arm modulation cycle, and t3 is an intermediate moment of the main bridge arm modulation cycle; and the period of time is between the moment t1 and the moment t3, or between the moment t3 and the moment t5; or are two same periods of time that are respectively between the moment t1 and the moment t3 and between the moment t3 and the moment t5.

In a possible implementation, the main bridge arm modulation cycle includes a moment t1 and a moment t2, where the moment t1 is a 1/4 cycle moment of the main bridge arm modulation cycle, the moment t2 is a 1/2 cycle moment of the main bridge arm modulation cycle, the period of time starts from a moment t3 and ends at a moment t4, t2>t4>t1>t3, and t4 minus t1 is equal to t1 minus t3.

In a possible implementation, the main bridge arm modulation cycle includes a moment t1, a moment t2, a moment t3, a moment t4, and a moment t5, where t1 is a start moment of the main bridge arm modulation cycle, t2 is a 1/4 cycle moment of the main bridge arm modulation cycle, the moment t3 is an intermediate moment of the main bridge arm modulation cycle, the moment t4 is a 3/4 cycle moment of the main bridge arm modulation cycle, and t5 is an end moment of the main bridge arm modulation cycle; and the period of time is two same periods of time that are both between the moment t1 and the moment t2 and between the moment t2 and the moment t3, or is four same periods of time that are respectively between the moment t1 and the moment t2, between the moment t2 and the moment t3, between the moment t3 and the moment t4, and between the moment t4 and the moment t5.

In a possible implementation, the main bridge arm modulation cycle includes a moment t1 and a moment t2, where the moment t1 is a 1/4 cycle moment of the main bridge arm modulation cycle, the moment t2 is a 1/2 cycle moment of the main bridge arm modulation cycle, the period of time is two periods of time with same duration, a first period of time starts from a moment t3 and ends at a moment t4, a second period of time starts from a moment t5 and ends at a moment t6, t2>t6>t5>t1>t4 >t3, t1 minus t4 is equal to t5 minus t1, and t4 minus t3 is equal to t6 minus t5.

In a possible implementation, the first effective modulus value is greater than the second effective modulus value; the controller is configured to: when the absolute value of the instantaneous value of the modulation signal of the bridge arm N is greater than or equal to the first effective modulus value in a first time period and is greater than the second effective modulus value and less than the first effective modulus value in an adjacent second time period, inject the modulation signal into the bridge arm N in the unipolar manner in the second time period, where the second time period is later than the first time period; or the controller is configured to: when the absolute value of the instantaneous value of the modulation signal of the bridge arm N is less than the second effective modulus value in a third time period and is greater than the second effective modulus value and less than the first effective modulus value in an adjacent fourth time period, inject the modulation signal into the bridge arm N in the bipolar manner in the fourth time period, where the fourth time period is later than the third time period.

In a possible implementation, the first switching threshold is greater than the second switching threshold, the controller is configured to: when the modulation degree of the three-phase four-bridge-arm inverter circuit changes from being greater than the first switching threshold to being greater than the second switching threshold and less than or equal to the first switching threshold, inject the modulation signal into the bridge arm N in the unipolar manner; or when the modulation degree of the three-phase four-bridge-arm inverter circuit changes from being less than the second switching threshold to being greater than or equal to the second switching threshold and less than the first switching threshold, inject the modulation signal into the bridge arm N in the bipolar manner.

According to a second aspect, a modulation method for a three-phase four-bridge-arm inverter circuit is provided. The method includes:
injecting a common mode signal into a main bridge arm of the three-phase four-bridge-arm inverter circuit and a bridge arm N of the three-phase four-bridge-arm inverter circuit, so that the main bridge arm operates in a discontinuous state; and when an absolute value of an instantaneous value of a modulation signal of the bridge arm N is greater than a first effective modulus value, injecting a modulation signal into the bridge arm N in a unipolar manner; or when an absolute value of an instantaneous value of a modulation signal of the bridge arm N is less than a second effective modulus value, injecting a modulation signal into the bridge arm N in a bipolar manner; or when a modulation degree of the three-phase four-bridge-arm inverter circuit is greater than a first switching threshold, injecting a modulation signal into the bridge arm N in a bipolar manner; or when a modulation degree of the three-phase four-bridge-arm inverter circuit is less than a second switching threshold, injecting a modulation signal into the bridge arm N in a unipolar manner, where the first switching threshold is greater than or equal to the second switching threshold. In a possible implementation, the common mode signal is injected into the main bridge arm and the bridge arm N, so that the main bridge arm operates in the discontinuous state when the absolute value of the instantaneous value of the modulation signal of the main bridge arm is greater than or equal to a first threshold.

In a possible implementation, the common mode signal is injected into the main bridge arm and the bridge arm N, so that the main bridge arm operates in the discontinuous state when the absolute value of the instantaneous value of the modulation signal of the main bridge arm is less than or equal to a second threshold and greater than or equal to a third threshold, where the second threshold is less than the first threshold, and the third threshold is greater than 0 and less than the second threshold.

In a possible implementation, when the load of the three-phase four-bridge-arm inverter circuit is an unbalanced load, a zero sequence modulation signal is injected into the bridge arm N; and the common mode signal is injected into the main bridge arm and the bridge arm N, so that the main bridge arm operates in the discontinuous state when the absolute value of the instantaneous value of the modulation signal of the main bridge arm is greater than a first zero sequence threshold.

In a possible implementation, the common mode signal is injected into the main bridge arm and the bridge arm N, so that the main bridge arm operates in the discontinuous state when the absolute value of the instantaneous value of the modulation signal of the main bridge arm is less than or equal to a second zero sequence threshold and greater than or equal to a third zero sequence threshold, where the second zero sequence threshold is less than the first zero sequence threshold, the third zero sequence threshold is greater than 0 and less than the second zero sequence threshold, and the third zero sequence threshold is greater than 0 and less than the second zero sequence threshold.

In a possible implementation, the main bridge arm modulation cycle includes a moment t1, a moment t3, and a moment t5, where t1 is a start moment of the main bridge arm modulation cycle, t5 is an end moment of the main bridge arm modulation cycle, and t3 is an intermediate moment of the main bridge arm modulation cycle; and the period of time is between the moment t1 and the moment t3, or between the moment t3 and the moment t5; or are two same periods of time that are respectively between the moment t1 and the moment t3 and between the moment t3 and the moment t5.

In a possible implementation, the main bridge arm modulation cycle includes a moment t1 and a moment t2, where the moment t1 is a 1/4 cycle moment of the main bridge arm modulation cycle, the moment t2 is a 1/2 cycle moment of the main bridge arm modulation cycle, the period of time starts from a moment t3 and ends at a moment t4, t2>t4>t1>t3, and t4 minus t1 is equal to t1 minus t3.

In a possible implementation, the main bridge arm modulation cycle includes a moment t1, a moment t2, a moment t3, a moment t4, and a moment t5, where t1 is a start moment of the main bridge arm modulation cycle, t2 is a 1/4 cycle moment of the main bridge arm modulation cycle, the moment t3 is an intermediate moment of the main bridge arm modulation cycle, the moment t4 is a 3/4 cycle moment of the main bridge arm modulation cycle, and t5 is an end moment of the main bridge arm modulation cycle; and the period of time is two same periods of time that are both between the moment t1 and the moment t2 and between the moment t2 and the moment t3, or is four same periods of time that are respectively between the moment t1 and the moment t2, between the moment t2 and the moment t3, between the moment t3 and the moment t4, and between the moment t4 and the moment t5.

In a possible implementation, the main bridge arm modulation cycle includes a moment t1 and a moment t2, where the moment t1 is a 1/4 cycle moment of the main bridge arm modulation cycle, the moment t2 is a 1/2 cycle moment of the main bridge arm modulation cycle, the period of time is two periods of time with same duration, a first period of time starts from a moment t3 and ends at a moment t4, a second period of time starts from a moment t5 and ends at a moment t6, t2>t6>t5>t1>t4 >t3, t1 minus t4 is equal to t5 minus t1, and t4 minus t3 is equal to t6 minus t5.

In a possible implementation, the first effective modulus value is greater than the second effective modulus value; when the absolute value of the instantaneous value of the modulation signal of the bridge arm N is greater than or equal to the first effective modulus value in a first time period and is greater than the second effective modulus value and less than the first effective modulus value in an adjacent second time period, the modulation signal is injected into the bridge arm N in the unipolar manner in the second time period, where the second time period is later than the first time period; or when the absolute value of the instantaneous value of the modulation signal of the bridge arm N is less than the second effective modulus value in a third time period and is greater than the second effective modulus value and less than the first effective modulus value in an adjacent fourth time period, the modulation signal is injected into the bridge arm N in the bipolar manner in the fourth time period, where the fourth time period is later than the third time period.

In a possible implementation, the first switching threshold is greater than the second switching threshold, when the modulation degree of the three-phase four-bridge-arm inverter circuit changes from being greater than the first switching threshold to being greater than the second switching threshold and less than or equal to the first switching threshold, the modulation signal is injected into the bridge arm N in the unipolar manner; or when the modulation degree of the three-phase four-bridge-arm inverter circuit changes from being less than the second switching threshold to being greater than or equal to the second switching threshold and less than the first switching threshold, the modulation signal is injected into the bridge arm N in the bipolar manner.

It should be understood that mutual reference may be made to the implementations and beneficial effects of the foregoing aspects of this application.

### BRIEF DESCRIPTION OF DRAWINGS

FIG. 1a to FIG. 1c are diagrams of application scenarios of an inverter according to an embodiment of this application;
FIG. 2a to FIG. 2d are diagrams of topologies of a three-phase four-bridge-arm inverter circuit according to an embodiment of this application;

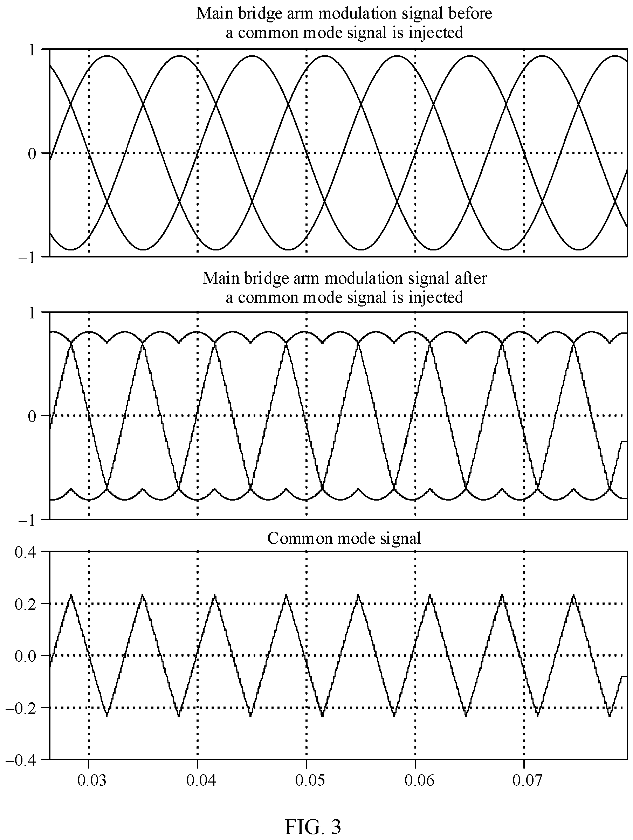

FIG. 3 is a diagram of an SVPWM modulation signal of a three-phase four-bridge-arm inverter circuit according to an embodiment of this application;
FIG. 4a to FIG. 4c are diagrams of a DPWM modulation signal of a three-phase four-bridge-arm inverter circuit according to an embodiment of this application;
FIG. 5a and FIG. 5b are diagrams of a unipolar modulation signal and a bipolar modulation signal of a three-phase four-bridge-arm inverter circuit according to an embodiment of this application;
FIG. 6a and FIG. 6b are diagrams of an equivalent principle of unipolar modulation and bipolar modulation according to an embodiment of this application;
FIG. 7a to FIG. 7d are diagrams of a DPWM modulation signal of a three-phase four-bridge-arm inverter circuit according to an embodiment of this application;
FIG. 8a to FIG. 8c are diagrams of a DPWM modulation signal with hysteresis control of a three-phase four-bridge-arm inverter circuit according to an embodiment of this application; and
FIG. 9a to FIG. 9c are diagrams of a control manner of a three-phase four-bridge-arm inverter circuit according to an embodiment of this application.

### DESCRIPTION OF EMBODIMENTS

To make the objectives, features, and advantages of this application more comprehensible, the following further describes this application in detail with reference to the accompanying drawings and specific implementations.

The "one embodiment" or the "embodiment" herein refers to a specific feature, structure, or characteristic that may be included in at least one implementation of this application. "In one embodiment" appearing in different places in this specification does not refer to a same embodiment, and is not a separate or selective embodiment that is mutually exclusive with another embodiment. Unless otherwise specified, in this specification, the words "connection, "connection", and "connection" that indicate an electrical connection all indicate direct or indirect electrical connection. The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

The technical solutions provided in embodiments of this application may be applied to a device having a three-phase four-bridge-arm inverter circuit topology, such as an inverter or an uninterrupted power supply (uninterrupted power supply, UPS), and may be applied to different application scenarios, for example, a photovoltaic power supply scenario, an energy storage power supply scenario, and a UPS power supply scenario. To facilitate understanding of the technical solutions provided in embodiments of this application, the following describes specific application of the technical solutions provided in embodiments of this application by selecting one of the scenarios.

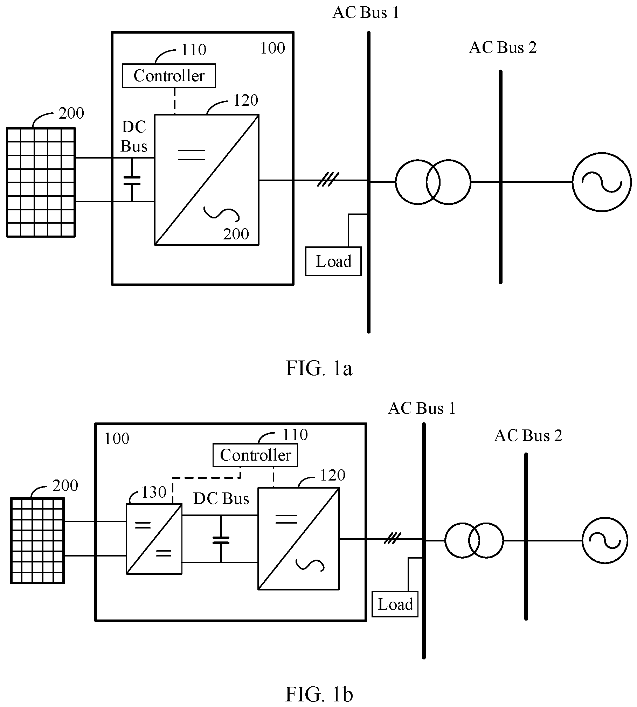

FIG. 1a to FIG. 1c are diagrams of application scenarios of a photovoltaic system according to an embodiment of this application. Each photovoltaic system provided in this embodiment of this application includes one photovoltaic string 200. The photovoltaic string 200 may be one or more strings, and one photovoltaic string is obtained by connecting one or more photovoltaic panels in series or in parallel. The photovoltaic string 200 is configured to convert received light energy into electric energy in a direct current form in a light condition, and transmit the electric energy to an inverter 100. The inverter 100 is configured to convert the direct current input by the photovoltaic string 200 into an alternating current, and output the alternating current to a load. It should be understood that, in a broad sense, the load may be a power grid, or may be a power consumption device, an energy storage device, or the like. The inverter 100 provided in this embodiment of this application may be separately connected to the power consumption device, the energy storage device, and the like, or may be separately connected to a power grid, or may be connected to all of the power grid, the power consumption device, the energy storage device, and the like. In an application scenario of the inverter 100 shown in FIG. 1a to FIG. 1c, an output end of the inverter 100 is directly connected to the power consumption device, the energy storage device, and the like (that is, a load shown in the figure), is connected to a transformer through an alternating current bus AC Bus 1, is connected to an alternating current bus AC BBus 2 after boosting by using the transformer, and is connected to a large power grid.

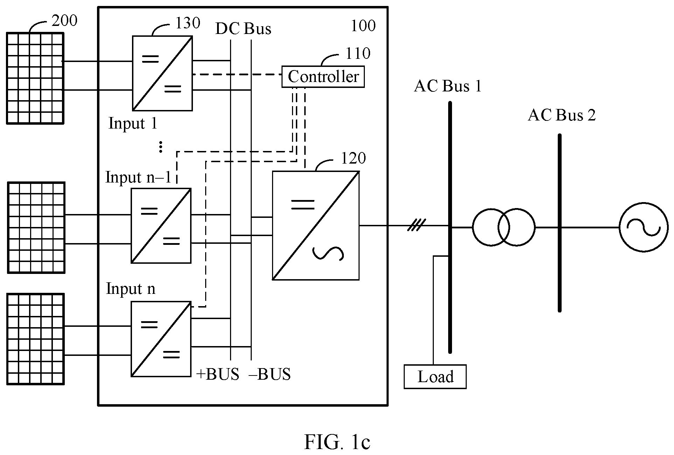

As shown in FIG. 1a, in a possible implementation, an inverter circuit 120 in the inverter 100 is directly connected to the photovoltaic string 200 through a direct current bus DC BBus. This is a single stage architecture inverter 100. As shown in FIG. 1b and FIG. 1c, the inverter circuit 120 in the inverter 100 may alternatively be first connected to a direct current/direct current conversion module 130 through the direct current bus DC BBus, and is connected to the photovoltaic string 200. This is a two stage architecture inverter 100.

In a possible implementation, an input end of the inverter 100 may be connected to a plurality of photovoltaic strings 200 (as shown in FIG. 1c). A photovoltaic panel of the photovoltaic string 200 may be connected to a photovoltaic optimizer, and the photovoltaic optimizer is configured to improve overall power generation efficiency of a photovoltaic system (not shown in the figure).

It should be noted that, in the foregoing application scenario, the load of the inverter 100 may supply power to an unbalanced load such as a single phase load or a two phase unbalanced load. To enable the inverter 100 to have a capability of coping with the unbalanced load, the inverter circuit 120 of the inverter 100 may use a three-phase four-bridge-arm circuit topology.

It should be understood that the three-phase four-bridge-arm inverter circuit includes three main bridge arms and one fourth bridge arm. The fourth bridge arm has a function of a neutral wire (neutral wire), and therefore is also referred to as a bridge arm N. When the inverter 100 supplies power to a balanced load, currents of the three main bridge arms of the three-phase four-bridge-arm inverter circuit are balanced, a current of the bridge arm N is 0, and none of switching transistors of the bridge arm N may operate. In this case, the three-phase four-bridge-arm inverter circuit is equivalent to a three-phase three-bridge-arm inverter circuit. When the inverter 100 supplies power to the unbalanced load, currents of the three main bridge arms of the three-phase four-bridge-arm inverter circuit are unbalanced, a zero sequence current is generated on the bridge arm N, and the switching transistors on the bridge arm N may be continuously turned on and off, to control the zero sequence current. In this way, quality of electric energy output by the inverter 100 is optimized.

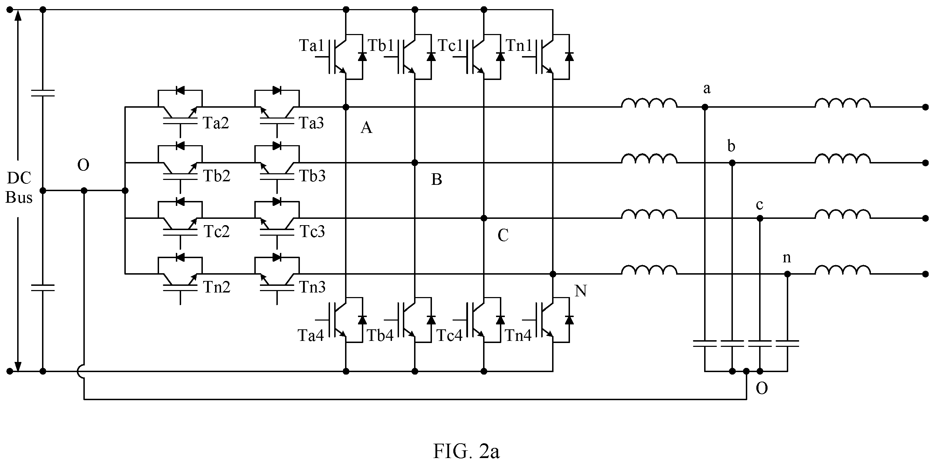

FIG. 2a to FIG. 2d are diagrams of circuit topologies of four three-phase four-bridge-arm inverter circuits according to an embodiment of this application. A T-type three-level inverter circuit shown in FIG. 2a includes a direct current bus DC BBus, three main bridge arms A, B, and C, and one bridge arm N. An output end of each bridge arm is connected to a corresponding LCL filter circuit. Each bridge arm includes one horizontal bridge arm and one vertical bridge arm. Two switching transistors in opposite directions are connected in series on the horizontal bridge arm. One end of the horizontal bridge arm is connected to a midpoint of a direct current bus DC BBus. The other end of the horizontal bridge arm is connected to a midpoint of the vertical bridge arm. Two switching transistors in a same direction are connected in series at two ends of the midpoint of the vertical bridge arm. One end of the vertical bridge arm is connected to a positive end of the direct current bus DC BBus. The other end of the vertical bridge arm is connected to a negative end of the direct current bus DC BBus. A line is led out between two filter inductors of an LCL filter circuit connected to an output end of each bridge arm, and is connected to the midpoint O of the direct current bus DC BBus.

It should be understood that the three-phase four-bridge-arm inverter circuit has various specific topologies. After reading the technical solutions provided in embodiments of this application, a person skilled in the art can easily apply the technical solutions provided in embodiments of this application to another similar three-phase four-bridge-arm inverter circuit by using the same or equivalent means. Various three-phase four-bridge-arm inverter circuits are not exhaustively listed in embodiments of this application. The four three-phase four-bridge-arm inverter circuits provided in embodiments of this application are merely exemplary references. A three-phase four-bridge-arm inverter circuit applicable to the technical solution provided in embodiments of this application is not limited.

The following describes in detail the four three-phase four-bridge-arm inverter circuits provided in embodiments of this application.

The four three-phase four-bridge-arm inverter circuits shown in FIG. 2a to FIG. 2d each include three main bridge arms A, B, and C and one bridge arm N. A main bridge arm A includes switching transistors Ta1, Ta2, Ta3, and Ta4. After LC filtering of a filter inductor and a filter capacitor,a current generated by alternate conduction of a switching transistor of the main bridge arm A can output a sine wave alternating current voltage in a phase A (point a relative to point O). The main bridge arm B includes switching transistors Tb1, Tb2, Tb3, and Tb4. After LC filtering of a filter inductor and a filter capacitor, a current generated by alternate conduction of a switching transistor of the main bridge arm B can output a sine wave alternating current voltage in a phase B (point b relative to point O). The main bridge arm C includes switching transistors Tc1, Tc2, Tc3, and Tc4. After LC filtering of a filter inductor and a filter capacitor, a current generated by alternate conduction of a switching transistors of the main bridge arm C can output a sine wave alternating current voltage in a phase C (point c relative to point O). The bridge arm N includes switching transistors Tn1, Tn2, Tn3, and Tn4. When the inverter 100 supplies power to the unbalanced load, currents on the three main bridge arms of the three-phase four-bridge-arm inverter circuit are unbalanced, and a zero sequence current is generated on the bridge arm N. In this case, the bridge arm N may receive a zero sequence modulation signal, so that the switching transistors Tn1, Tn2, Tn3, and Tn4 may be continuously turned on and turned off, and the currents on the three main bridge arms are balanced.

In a possible implementation, as shown in FIG. 2a, the inverter circuit 120 uses a T-type three-level three-phase four-bridge-arm inverter circuit topology. Connection points of a switching transistors Ta1 and Ta4 are connected to an LCL filter circuit at an output end of the bridge arm A. Switching transistors Ta2 and Ta3 are reversely connected in series between connection points of the switching transistors Ta1 and Ta4 and a middle point of the direct current bus DC BBus. Connection points of switching transistors Tb1 and Tb4 are connected to the LCL filter circuit at an output end of the bridge arm B. Switching transistors Tb2 and Tb3 are reversely connected in series between connection points of the switching transistors Tb1 and Tb4 and the middle point of the direct current bus DC BBus. Connection points of switching transistors Tc1 and Tc4 are connected to the LCL filter circuit at an output end of the bridge arm C. Switching transistors Tc2 and Tc3 are reversely connected in series between connection points of the switching transistors Tc1 and Tc4 and the middle point of the direct current bus DC BBus. Connection points of switching transistors Tn1 and Tn4 are connected to the LCL filter circuit at an output end of the bridge arm N. Switching transistors Tn2 and Tn3 are reversely connected in series between connection points of the switching transistors Tn1 and Tn4 and the midpoint of the direct current bus DC BBus. Reverse means that conduction directions of parasitic diodes of the switching transistors are opposite.

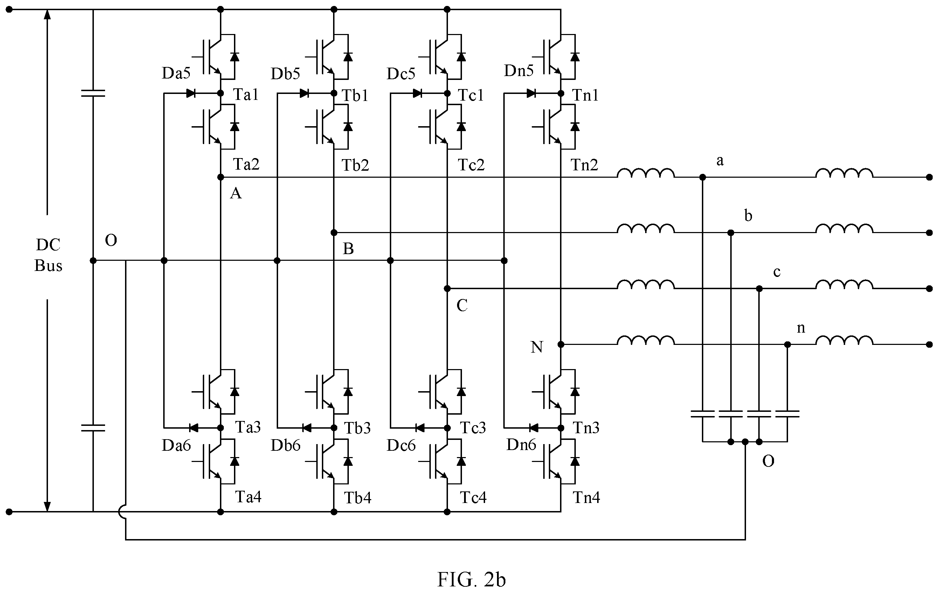

In a possible implementation, as shown in FIG. 2b, the inverter circuit 120 uses an I-type three-level three-phase four-bridge-arm inverter circuit topology. Switching transistors Ta1, Ta2, Ta3, and Ta4 of the bridge arm A are connected in series between a positive end and a negative end of the direct current bus DC BBus. The switching transistors Ta1 and Ta2 have the same direction. Directions of switching transistors Ta3 and Ta4 are opposite to the directions of the switching transistors Ta1 and Ta2. An output end of the bridge arm A led out between the switching transistors Ta2 and Ta3 is connected to an LCL filter circuit of the output end of the bridge arm A. Two diodes Da5 and Da6 with opposite conduction directions are connected in series between connection points of the switching transistors Ta1 and Ta2 and connection points of the switching transistors Ta3 and Ta4. Connection points of the diodes Da5 and Da6 are connected to the middle point of the direct current bus DC BBus. The switching transistors Ta2 and Ta3 are reversely connected in series between connection points of the switching transistors Ta1 and Ta4 and the middle point of the direct current bus DC BBus. Switching transistors Tb1, Tb2, Tb3, and Tb4 of the bridge arm B are connected in series between the positive end and the negative end of the direct current bus DC BBus. The switching transistors Tb1 and Tb2 have a same direction. Directions of switching transistors Tb3 and Tb4 are opposite to the directions of the switching transistors Tb1 and Tb2. An output end of the bridge arm B led out between the switching transistors Tb2 and Tb3 is connected to an LCL filter circuit of the output end of the bridge arm B. Two diodes Db5 and Db6 with opposite conduction directions are connected in series between connection points of the switching transistors Tb1 and Tb2 and connection points of the switching transistors Tb3 and Tb4. Connection points of the diodes Db5 and Db6 are connected to the middle point of the direct current bus DC BBus. The switching transistors Tb2 and Tb3 are reversely connected in series between the connection points of the switching transistors Tb1 and Tb4 and the middle point of the direct current bus DC BBus. Switching transistors Tc1, Tc2, Tc3, and Tc4 of the bridge arm C are connected in series between the positive end and the negative end of the direct current bus DC BBus. The switching transistors Tc1 and Tc2 have the same direction. Directions of switching transistors Tc3 and Tc4 are opposite to directions of the switching transistors Tc1 and Tc2. An output end of the bridge arm C led out between the switching transistors Tc2 and Tc3 is connected to an LCL filter circuit of the output end of the bridge arm C. Two diodes Dc5 and Dc6 with opposite conduction directions are connected in series between connection points of the switching transistors Tc1 and Tc2 and connection points of the switching transistors Tc3 and Tc4. Connection points of the diodes Dc5 and Dc6 are connected to the middle point of the direct current bus DC BBus. The switching transistors Tc2 and Tc3 are reversely connected in series between the connection points of the switching transistors Tc1 and Tc4 and the middle point of the direct current bus DC Bus. Switching transistors Tn1, Tn2, Tn3, and Tn4 of the bridge arm N are connected in series between the positive end and the negative end of the direct current bus DC Bus. The switching transistors Tn1 and Tn2 have a same direction. Directions of switching transistors Tn3 and Tn4 are opposite to the directions of the switching transistors Tn1 and Tn2. An output end of the bridge arm N led out between the switching transistors Tn2 and Tn3 is connected to an LCL filter circuit of the output end of the bridge arm N. Two diodes Dn5 and Dn6 with opposite conduction directions are connected in series between the connection points of the switching transistors Tn1 and Tn2 and connection points of the switching transistors Tn3 and Tn4. Connection points of the diodes Dn5 and Dn6 are connected to the middle point of the direct current bus DC Bus. The switching transistors Tn2 and Tn3 are reversely connected in series between the connection points of the switching transistors Tn1 and Tn4 and the middle point of the direct current bus DC Bus.

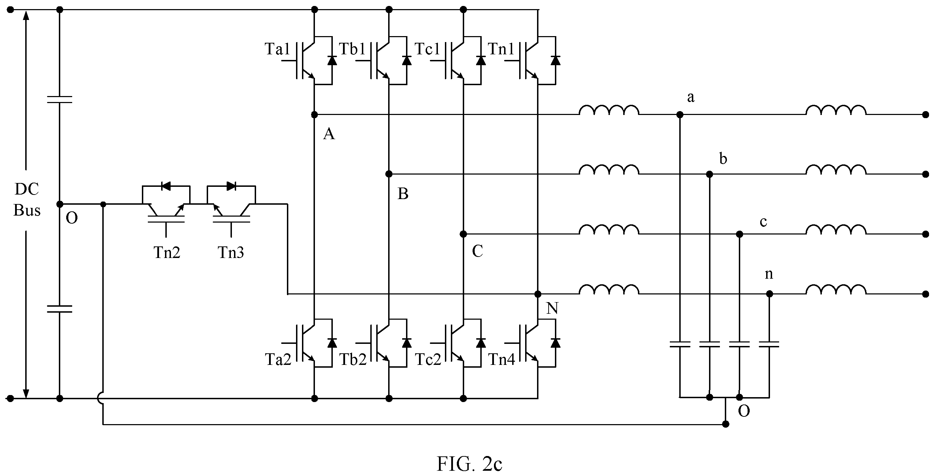

In a possible implementation, as shown in FIG. 2c, the inverter circuit 120 uses a T-type two-level three-phase four-bridge-arm inverter circuit. Switching transistors Ta1 and Ta2 of the bridge arm A are connected in series in a same direction between a positive end and a negative end of the direct current bus DC BBus. Connection points of the switching transistors Ta1 and Ta2 lead out of an output end of the bridge arm A. The output end of the bridge arm A is connected to an LCL filter circuit of the bridge arm A. Switching transistors Tb1 and Tb2 of the bridge arm B are connected in series in a same direction between the positive end and the negative end of the direct current bus DC BBus. Connection points of the switching transistors Tb1 and Tb2 lead out of an output end of the bridge arm B. The output end of the bridge arm B is connected to an LCL filter circuit of the bridge arm B. Switching transistors Tc1 and Tc2 of the bridge arm C are connected in series in a same direction between the positive end and the negative end of the direct current bus DC BBus. Connection points of the switching transistors Tc1 and Tc2 lead out of an output end of the bridge arm C. The output end of the bridge arm C is connected to an LCL filter circuit of the bridge arm C. Switching transistors Tn1 and Tn4 of the bridge arm N are connected in series in a same direction between a positive end and a negative end of the direct current bus DC Bus. Connection points of the switching transistors Tn1 and Tn4 lead out of an output end of the bridge arm N. The output end of the bridge arm N is connected to an LCL filter circuit of the bridge arm N. Switching transistors Tn2 and Tn3 of the bridge arm N are connected in series between the connection points of the switching transistors Tn1 and Tn4 and the midpoint of the direct current bus DC Bus.

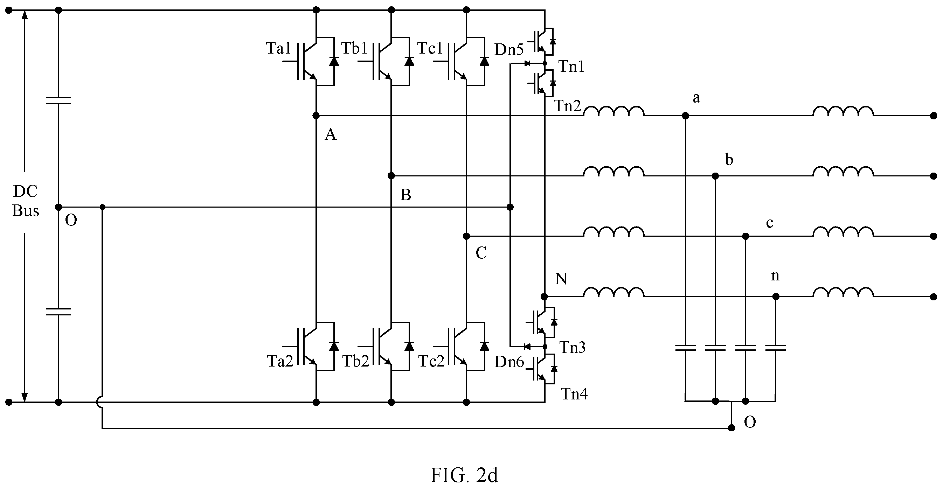

In a possible implementation, as shown in FIG. 2d, the inverter circuit 120 uses an I-type two-level three-phase four-bridge-arm inverter circuit. In comparison with the I-type three-level three-phase four-bridge-arm inverter circuit shown in FIG. 2b, Two switching transistors are omitted for the three main bridge arms A, B and C, and four switching transistors are reserved for the bridge arm N. In addition, diodes Dn5 and Dn6 that are reversely connected in series between connection point betweens of the switching transistors Tn1 and Tn2 and connection points of the switching transistors Tn3 and Tn4 are reserved.

It should be noted that, in addition to processing a zero sequence current, the bridge arm N may further receive a common mode signal together with the main bridge arm, to improve electric energy output quality of the three-phase four-bridge-arm inverter circuit.

In a possible implementation, a modulation manner of the main bridge arm can be changed by injecting the common mode signal into both the main bridge arm and the bridge arm N, thereby improving an operating state of the inverter 100. Without changing a feature of an output phase voltage of the inverter 100, the common mode signal is injected, so that utilization of a bus voltage of the inverter circuit 120 can be improved, or discontinuous modulation can be performed on the main bridge arm, thereby reducing a switching loss of the main bridge arm. Switching the common mode signal between unipolar modulation and bipolar modulation can avoid loss of the modulation signal when the modulation signal of the bridge arm N is small.

The following describes in detail the technical solutions provided in embodiments of this application with reference to a specific circuit topology and control manner as an example.

FIG. 1a and FIG. 2a are used as an example. The inverter 100 includes the inverter circuit 120. The inverter circuit 120 is a circuit topology structure shown in FIG. 2a. An input end of the inverter circuit 120 is connected to a direct current output end of the photovoltaic string 200 through the direct current bus DC BBus. An output end of the inverter circuit 120 is connected to a power consumtion device and a power grid. The controller 110 in the inverter 100 is configured to control the inverter circuit 120 to work, and input a pulse width modulation (pulse width modulation, PWM) signal to a switching transistor in the inverter circuit 120, to drive the inverter circuit 120 to perform direct current-to-alternating current power conversion.

It may be understood that a PWM modulation signal of each main bridge arm is a half of an alternating current output phase voltage corresponding to the main bridge arm divided by a direct current input voltage. As shown in FIG. 1a, for example, a half of a direct current input voltage is a half of a direct current bus DC BBus voltage. In a normal use process of the inverter 100, if a power grid voltage or a load voltage does not significantly change, an alternating current output voltage of the inverter 100 usually remains unchanged. For example, when the inverter 100 is normally used, an effective value of a line voltage of a three-phase alternating current output voltage is 380 V, or an effective value of an industry standard line voltage is 690 V. A 380 V line voltage is used as an example. An effective value of a phase voltage of each phase of the inverter circuit 120 is 220 V. In this case, a waveform of a three-phase alternating current output phase voltage is presented as a sine wave with a voltage peak value of 220xsqrt(2)=311.17 V. A phase difference between phases of the three-phase alternating current output voltages is 120°, and corresponds to voltages of three main bridge arm output voltages of the three-phase four-bridge-arm inverter circuit 120 relative to a direct current bus midpoint, for example, a voltage of a point a relative to a point O in FIG. 2a, a voltage of a point b relative to the point O, and a voltage of a point c relative to the point O.

A value of the voltage of the direct current bus DC BBus is determined by a direct current input voltage of the inverter circuit 120. If a valid value of the alternating current output voltage is 220 V, when the direct current input voltage is 700 V, the voltage of the direct current bus DC BBus is 700 V. The modulation signal of the inverter circuit 120 is a sine wave modulation signal with a peak value of 311.17/350=0.889. In this case, a modulus value of the modulation signal received by the inverter circuit 120 is always less than 1. In other words, the inverter circuit 120 is always not in an over-modulation state, and may always work in a sinusoidal pulse width modulation (sinusoidal pulse width modulation, SPWM) mode. Further, the controller 110 may inject the common mode signal into the three main bridge arms A, B, C, and N of the inverter circuit 120, so that the inverter circuit 120 works in a space vector pulse width modulation (space vector pulse width modulation, SVPWM) mode. Utilization of the bus voltage by the inverter circuit 120 is improved, and operating efficiency of the inverter 100 is improved.

In addition to using the common mode signal to improve utilization of the inverter circuit 120 for the direct current input voltage, the common mode signal may be injected to enable the switching transistor of the main bridge arm to work in a discontinuous state, thereby reducing a loss of the switching transistors of the main bridge arm.

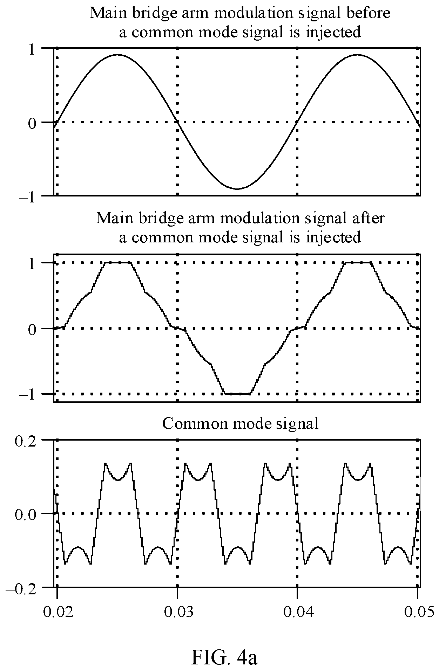

FIG. 4a is a waveform diagram of a modulation signal of one main bridge arm in the inverter circuit 120 before and after a common mode signal is injected. Waveforms of modulation signals of the other two main bridge arms are the same, and only a phase difference is 120°. Modulation signals of the other two main bridge arms are not described in detail herein. As shown in FIG. 4a, after a common mode signal is superimposed on a main bridge arm modulation signal whose waveform is a sine wave, the main bridge arm modulation signal becomes a quasi-sine wave. Specifically, the common mode signal and an original modulation signal of the main bridge arm are superimposed, so that the modulation signal of the main bridge arm remains 1 near a peak value of the original modulation signal of the main bridge arm. In other words, the switching transistor of the main bridge arm is controlled to remain in an always-on state for a period of time. In this period of time, the switching transistor of the main bridge arm does not perform a continuous switching action, and works in a discontinuous PWM mode (discontinuous pulse width modulation, DPWM), so that a switching loss of the switching transistor of the main bridge arm can be reduced. In this case, a bridge arm output voltage of the main bridge arm is clamped at a half of a voltage of a direct current bus DC BBus in a period of time in a main bridge arm modulation cycle. It should be understood that the period of time herein may be a continuous period of time, or may be a plurality of periods of time, and duration of the plurality of periods of time is the same.

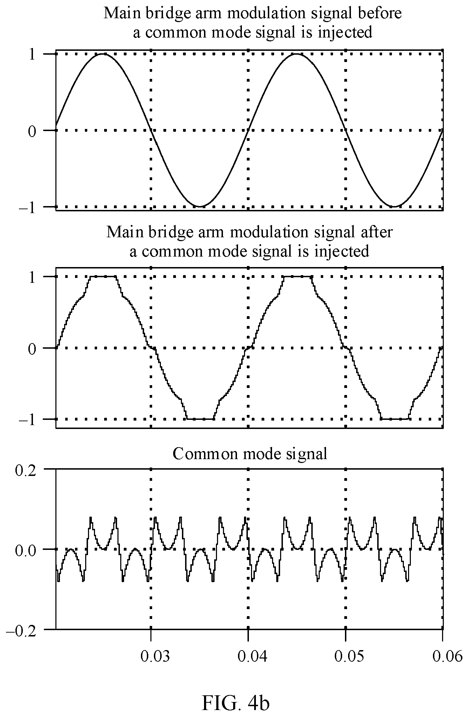

Refer to FIG. 4b. The modulation signal of the main bridge arm is larger than a modulation signal in FIG. 4a, and a value of the modulation signal of the main bridge arm at a peak value is 1. For example, when a valid value of the alternating current output voltage is 220 V, a direct current input voltage is 622.34 V, and a voltage of the direct current bus DC BBus is 622.34 V. A half of the voltage of the direct current bus DC BBus is exactly equal to a peak value 311.17 V of an alternating current voltage output by the inverter circuit 120. In this case, an absolute value of the common mode signal in the period of time near a peak value of the modulation signal of the main bridge arm may be correspondingly reduced, and after the common mode signal is superimposed with the modulation signal of the main bridge arm, a quasi-sine wave modulation signal may also be obtained. The quasi-sine wave modulation signal is maintained at 1 near the peak value of an original modulation signal of the main bridge arm. The switching transistor of the main bridge arm remains in an always-on state. The switching transistors of the main bridge arm do not perform continuous switching actions and work in the discontinuous PWM mode. A switching loss of the switching transistor of the main bridge arm can be reduced.

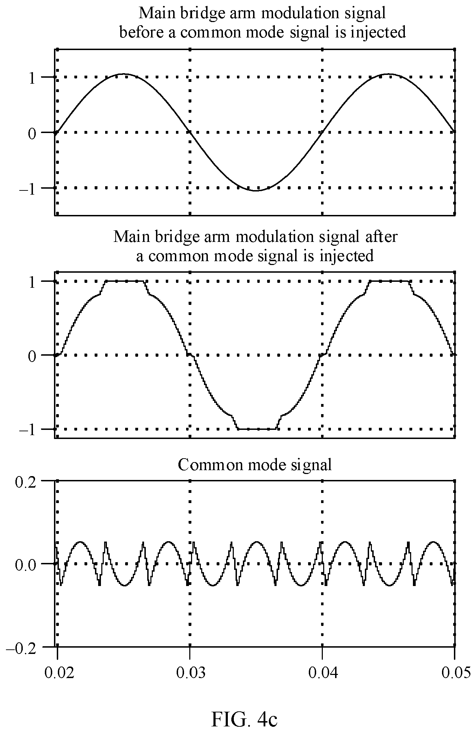

Refer to FIG. 4c. The modulation signal of the main bridge arm is further increased compared with the modulation signal in FIG. 4b, and an absolute value of the modulation signal is greater than 1 in a specific period of time. For example, the valid value of the alternating current output voltage is 220 V, the direct current input voltage is 600 V, the voltage of the direct current bus DC BBus is 600 V, and the modulation signal of the three-phase four-bridge-arm inverter circuit is a sine wave modulation signal whose peak value is 311.17/300=1.037. In this case, the inverter circuit 120 has a modulation signal whose modulus value is greater than 1 in one modulation cycle. In other words, the inverter circuit 120 is in an over-modulation state in a period of time in one modulation cycle. This causes distortion of an output voltage waveform, and inverter circuit 120 cannot work in the SPWM mode. In this case, a common mode signal may also be injected to enable the main bridge arm to work in the discontinuous PWM mode.

The following describes a specific implementation principle of DPWM modulation in a mathematical derivation manner. In a conventional PWM modulation process, the main bridge arms A, B, and C respectively receive modulation signals Uₐ, U_{b}, and U_{c}. A common mode signal is injected into the bridge arm N and the three main bridge arms at the same time, so that a reverse or codirectional common mode signal is superimposed on the modulation signal of the main bridge arm at a peak, so that the modulation signal of the main bridge arm remains 1 within a specific period of time. In this case, a modulation signal of the bridge arm A is Uₛₐ=Uₐ+U_{Cmv}, a modulation signal of the bridge arm B is U_{sb}=U_{b}+U_{Cmv}, and a modulation signal of the bridge arm C is U_{sc}=U_{c}+U_{Cmv}, so that an absolute value of the modulation signal at a peak of an output voltage waveform changes from being greater than 1 or less than 1 to being equal to 1. Therefore, it is learned that the modulation signal of the main bridge arm is a modulation signal that is similar to a sine wave form and that is obtained after "peak clipping" is performed on the peak of the modulation signal. A common mode voltage is superimposed on the output voltage of the main bridge arm on which the common mode signal is superimposed. Because the bridge arm N also has the common mode signal, and the bridge arm N also outputs the common mode voltage, the inverter circuit 120 finally outputs phase voltages. A phase A is used as an example. A bridge arm output voltage N is subtracted from a bridge arm A output voltage, and common mode voltages are canceled. A finally output phase A voltage is still a voltage waveform output under control based on the original modulation signal of the bridge arm A. In other words, after the common mode signal is injected, the modulation signal for adjusting the phase A voltage is equivalent to Uₐₙ=Uₛₐ-Uₙ=Uₛₐ-U_{Cmv}=Uₐ.

Theoretically, the main bridge arm can work in the DPWM mode by injecting the common mode signal. However, because the switching transistor is limited by minimum turn-on time and dead zone time, when the common mode signal is small, because the modulation signal on the bridge arm N is excessively small, the switching transistors on the bridge arm N may not be effectively controlled to perform continuous switching actions. As a result, the common mode signal is lost on the bridge arm N, and finally a voltage waveform output by the inverter circuit 120 is distorted. For example, when a direct current input voltage is 600 V, because an over-modulation degree of the modulation signal of the main bridge arm at a peak is low, a maximum value of the modulation signal is only 1.037, and a maximum value of a modulus value of a reverse common mode signal that needs to be injected is small, and is only 0.037. Due to limitation of the dead zone time and the minimum turn-on time of the switching transistor, a common mode signal sent by the controller 110 to the switching transistor of the bridge arm N may be lost. Consequently, a common mode signal U_{Cmv} received by the bridge arm N is actually equal to 0. Because the common mode signal on the main bridge arm is superimposed with an original modulation signal of the main bridge arm, a total modulation signal of the main bridge arm is large, and the common mode signal is not lost due to limitation of the dead zone time and the minimum turn-on time of the switching transistor. Uₛₐ still meets Uₐₙ=Uₛₐ-Uₙ=Uₛₐ+U_{Cmv}-0=Uₐ+U_{Cmv}. Therefore, a waveform of the output voltage of the main bridge arm relative to a waveform of the output voltage of the bridge arm N, that is, a phase voltage waveform of the phase A, cannot cancel a common mode voltage part, and a finally presented phase voltage waveform is a distorted sine wave after "peak clipping".

The foregoing embodiment describes a problem that a modulation signal generated when the common mode signal is injected in a unipolar modulation manner is lost. Unipolar modulation means that in a positive half-modulation cycle or a negative half-modulation cycle, a PWM voltage output by a bridge arm is only a positive level and a 0 level, or is only a negative level and a 0 level. To prevent a modulation signal from being lost when a "peak" is small, the common mode signal may be injected in the bipolar modulation manner. Bipolar modulation means that in any modulation cycle, the PWM voltage output by the bridge arm can be switched between the positive level, the negative level, and the 0 level. The positive level and the negative level partially cancel each other, and may be finally equivalent to a unipolar modulation signal that is only a positive level or only a negative level in a half period. For example, for a positive value modulation signal with a magnitude of 0.1 that is output through unipolar modulation, when bipolar modulation is used, a superposed positive value modulation signal with an absolute value of 0.3 and a superposed negative value modulation signal with an absolute value of 0.2 may be output, to obtain a positive value modulation signal with an absolute value of 0.1 that is output in unipolar modulation. In this way, the absolute value of the common mode signal can be increased. This prevents the common mode signal on the bridge arm N from being lost due to an excessively small absolute value of the modulation signal.

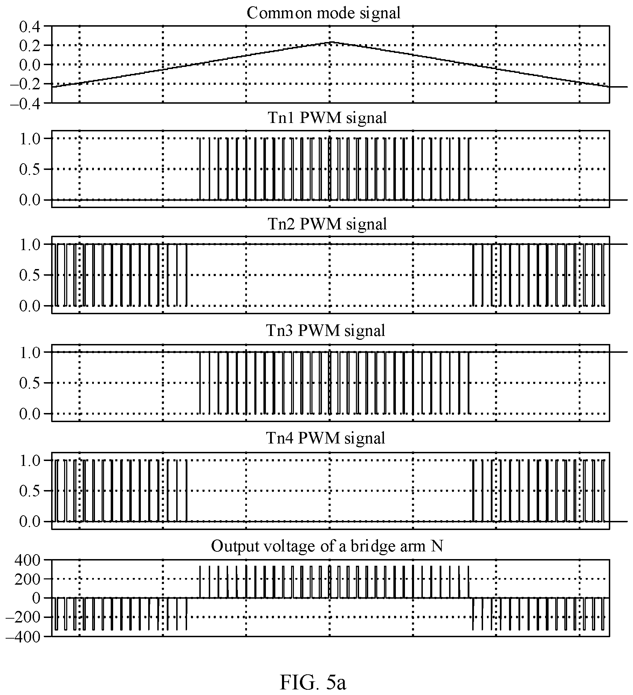

FIG. 5a is a diagram of injecting a common mode signal into a bridge arm N in a unipolar modulation manner. With reference to FIG. 2a, in a half modulation cycle, only the switching transistor Tn1 and the switching transistor Tn3 are turned on, or only the switching transistor Tn2 and the switching transistor Tn4 are turned on. In this way, an output voltage of the bridge arm N is always kept at a positive level and a zero level, or is always kept at a negative level and a zero level in a half modulation cycle. With reference to a PWM signal of the switching transistor Tn1 and the common mode signal, it can be seen that, when the common mode signal is small, a PWM pulse width of the switching transistor Tn1 is small. To be specific, turn-on time of the switching transistor Tn1 is short. Due to limitation of dead zone time and minimum turn-on time of the switching transistor Tn1, the switching transistor Tn1 may not be turned on or off in a short time. Consequently, the modulation signal is lost, and injection of the common mode signal fails.

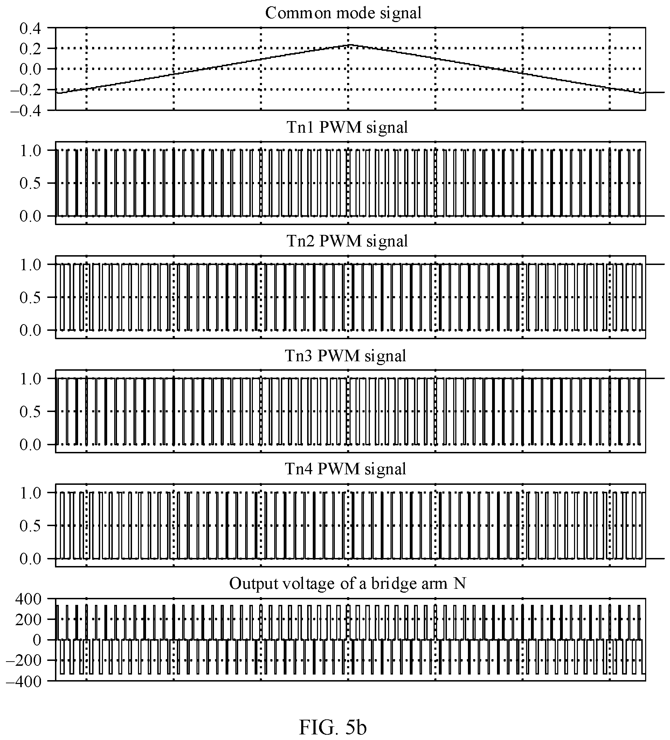

FIG. 5b is a diagram of injecting a common mode signal into a bridge arm N in a bipolar modulation manner. Similarly, with reference to FIG. 2a, in a half modulation cycle, the switching transistor Tn1, the switching transistor Tn2, the switching transistor Tn3, and the switching transistor Tn4 are all turned on or turned off. In this way, an output voltage of the bridge arm N is switched between a positive level, a zero level and a negative level in a half modulation cycle. It can be understood that an external output voltage is finally a positive voltage (a positive level PWM pulse width is longer than a negative level PWM pulse width) or a negative voltage (a positive level PWM pulse width is shorter than a negative level PWM pulse width) when the positive level and negative level are switched in short time. A bipolar modulation signal may be equivalent to a unipolar modulation signal. Output voltage waveforms that are finally obtained are the same. Because in bipolar modulation, the pulse width of the PWM signal received by the switching transistor of the bridge arm N is large, no loss of the modulation signal occurs on the bridge arm N, and the bridge arm N can effectively output a common mode voltage. Finally, a common mode voltage part of the output voltage of the main bridge arm and the output voltage of the bridge arm N may cancel each other, so that a phase voltage of an output three-phase alternating current is in a sine wave form.

For a principle of bipolar modulation that is equivalent to unipolar modulation, refer to the following description.

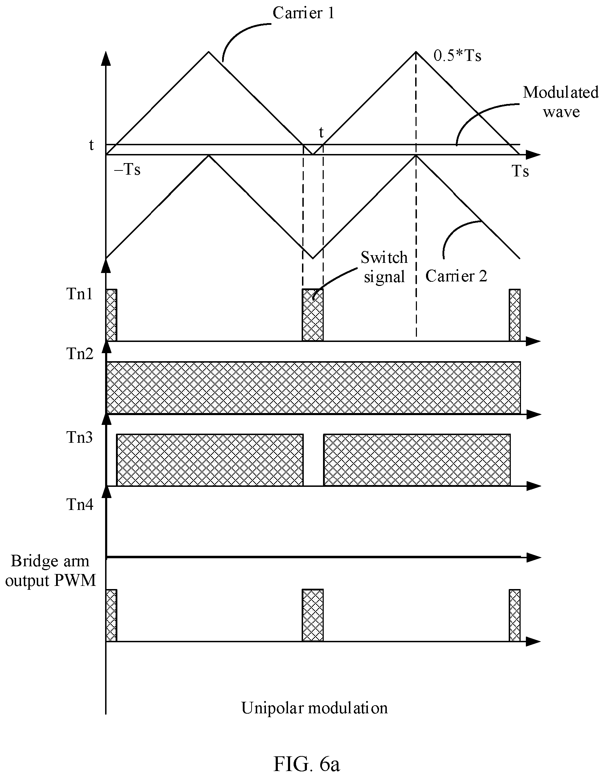

In a unipolar PWM signal, with reference to FIG. 2a and FIG. 6a, it is assumed that an instantaneous value of a modulated wave is t, a switching frequency is fs, and modulation cycles of a carrier 1 and a carrier 2 are ts. Waveforms of the carrier 1 and the carrier 2 are isosceles right triangles. The carrier 1 is used to control the switching transistor Tn1 and the switching transistor Tn3, and the carrier 2 is used to control the switching transistor Tn2 and the switching transistor Tn4.

The switching transistor Tn1 is used as an example. It can be learned that a pulse width *tₒₙ* for controlling, by the modulation wave t, the switching transistor Tn1 (and controlling the switching transistor Tn3 to be turned off) to be turned on is: ${t}_{on} = \frac{t}{0.5 {t}_{s}}$

When *tₒₙ* <10%, the PWM signal is limited by dead zone time and minimum turn-on time of a switching transistor, resulting in loss of the PWM signal.

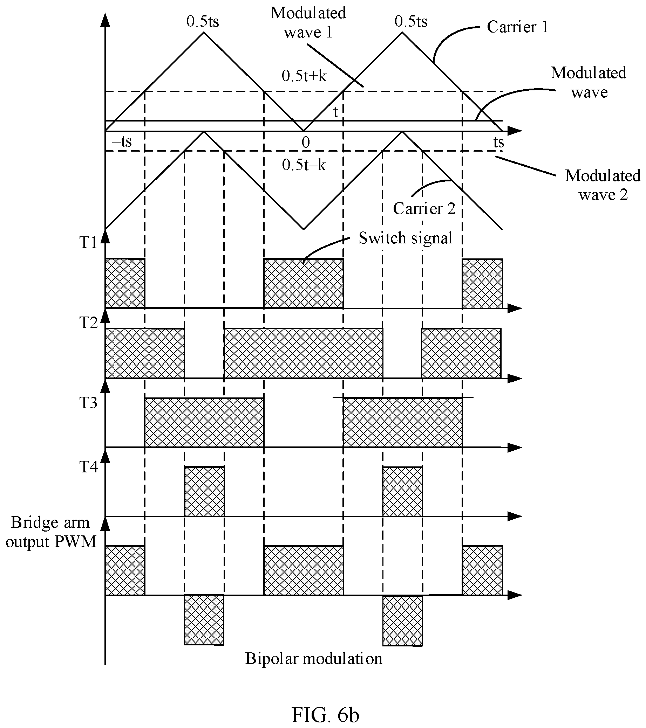

A basic principle of a bipolar PWM modulation manner is shown in FIG. 6b. The bipolar PWM modulation mode uses a positive negative alternating bipolar triangular carrier and a modulation wave, and the bipolar PWM signal may be directly obtained by comparing the triangular carrier and the modulation wave. Therefore, bipolar modulation in this application is characterized in that there are a positive level, a zero level, and a negative level in both a positive half cycle and a negative half cycle of bridge armoutput voltage modulation. In other words, there are P, O, and N levels in each half modulation cycle. Modulation signal offset compensation can be flexibly performed by adjusting the bipolar coefficient.

A principle of bipolar PWM modulation is as follows.

To resolve a narrow pulse problem, compensation processing is performed on a modulated wave t. k is a compensation value, a modulation signal of a compensated modulation wave 1 is 0.5t+k, and a modulation signal of a compensated modulation wave 2 is 0.5t-k. This is equivalent to that the modulation wave is split into the modulation wave 1 and the modulation wave 2. The modulation wave 1 is used to control the switching transistor Tn1 and the switching transistor Tn3, and the modulation wave 2 is used to control the switching transistor Tn2 and the switching transistor Tn4.
(1) Time of a 1 level is turn-on time of the switching transistor tn1 (turn-off time of the switching transistor tn3), and is equivalent to: ${t}_{1 on} = {t}_{3 off} = \frac{0.5 t + k}{0.5 {t}_{s}}$
(2) Time of a -1 level is turn-off time of the switching transistor tn4 (turn-on time of the switching transistor tn2), and is equivalent to: ${t}_{2 on} = {t}_{4 off} = \frac{0.5 {t}_{s} + 0.5 t - k}{0.5 {t}_{s}} \left(0.5t-k<0\right)$
(3) It can be learned from (1) and (2) that equivalent level time is: ${t}_{on} = \frac{0.5 t + k}{0.5 {t}_{s}} - \left(1-\frac{0.5 {t}_{s} + 0.5 t - k}{0.5 {t}_{s}}\right) = \frac{0.5 t + k}{0.5 {t}_{s}} - 1 + \frac{0.5 {t}_{s} + 0.5 t - k}{0.5 {t}_{s}} = \frac{t}{0.5 {t}_{s}}$

Alternatively, the following implementation may be performed:
(1) Time of a 1 level is turn-on time of the switching transistor tn1 (turn-off time of the switching transistor tn3), and is equivalent to: ${t}_{1 on} = {t}_{3 off} = \frac{t + k}{0.5 {t}_{s}}$
(2) Time of a-1 level is turn-off time of the switching transistor tn4 (turn-on time of the swithching transistor tn2), and is equivalnet to:${t}_{2 on} = {t}_{4 off} = \frac{0.5 {t}_{s} - k}{0.5 {t}_{s}} \left(k>0\right)$
(3) It can be learned from (1) and (2) that equivalent level time is: ${t}_{on} = \frac{t + k}{0.5 {t}_{s}} - \left(1-\frac{0.5 {t}_{s} - k}{0.5 {t}_{s}}\right) = \frac{t + k}{0.5 {t}_{s}} - 1 + \frac{0.5 {t}_{s} - k}{0.5 {t}_{s}} = \frac{t}{0.5 {t}_{s}}$

It can be learned from the foregoing analysis that the modulation signal of the switching transistor can be compensated by adjusting a k value, so that a narrow pulse problem is resolved and a result of the switching transistor is not affected. Obviously, in bipolar modulation, the same technical effect in unipolar modulation can be achieved by dynamically adjusting distribution of t in combination with compensation of the k value.

Based on the foregoing equivalence principle of unipolar modulation and bipolar modulation, bipolar modulation may be used when the modulation signal of the bridge arm N is small, to avoid loss of the modulation signal.

In a possible implementation provided in this application, FIG. 2a is used as an example. With reference to FIG. 5a and FIG. 5b, when the absolute value of the instantaneous value of the modulation signal of the bridge arm N is greater than the first effective modulus value, the controller 110 jointly injects the common mode signal into the three main bridge arms A, B, and C and the bridge arm N in the unipolar manner shown in FIG. 5a. Alternatively, when the absolute value of the instantaneous value of the modulation signal of the bridge arm N is less than the second effective modulus value, the common mode signal is injected into the three main bridge arms A, B, and C and the bridge arm Ns in the bipolar manner shown in FIG. 5b. Therefore, when the modulation signal of the bridge arm N is small, loss of the modulation signal is avoided, and distortion of the output waveform of the main bridge arm is prevented. It should be understood that the first effective modulus value is greater than or equal to the second effective modulus value.

Through switching between the unipolar modulation scheme and the bipolar modulation scheme, the inverter circuit 120 can flexibly perform various different DPWM modulation manners, loss of a modulation signal does not occur, and a switching loss of the main bridge arm is reduced. Two DPWM control modes are described below.

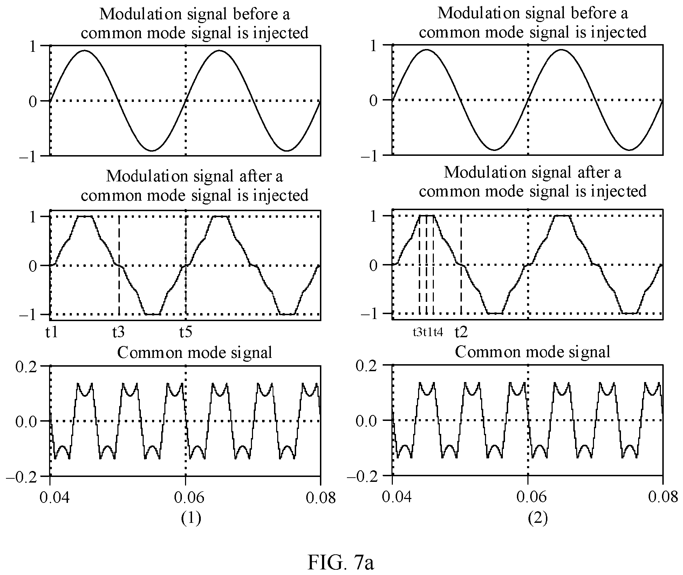

FIG. 7a is a diagram of a modulation signal received when the inverter circuit 120 operates in a DPWM modulation mode. Because the modulation signal of the main bridge arm is "peak clipped" at a peak, a modulus value of the modulation signal remains unchanged at 1. It may be considered that switching transistors T2 and T3 of a main bridge arm are in an always-on state, and the switching transistors do not operate during this period of time, so that a switching loss can be reduced. In other words, the switching transistor of the main bridge arm does not keep continuous on/off operation in a modulation cycle. It can be considered that the main bridge arm operates in a discontinuous operating state. A modulation manner in which a common mode signal is injected so that the switching transistor of the main bridge arm does not operate for a period of time in a modulation cycle is the DPWM modulation mode. As described above, DPWM modulation may be implemented by injecting the common mode signal in the unipolar modulation manner, or may be implemented by injecting the common mode signal in the bipolar modulation manner. Because the common mode signal injected in the unipolar modulation manner may have a risk of being lost on the bridge arm N, the common mode signal may be injected in the bipolar modulation manner, to increase a PWM pulse width of the common mode signal, thereby preventing the common mode signal from being lost on the bridge arm N, and ensuring implementation of DPWM modulation.

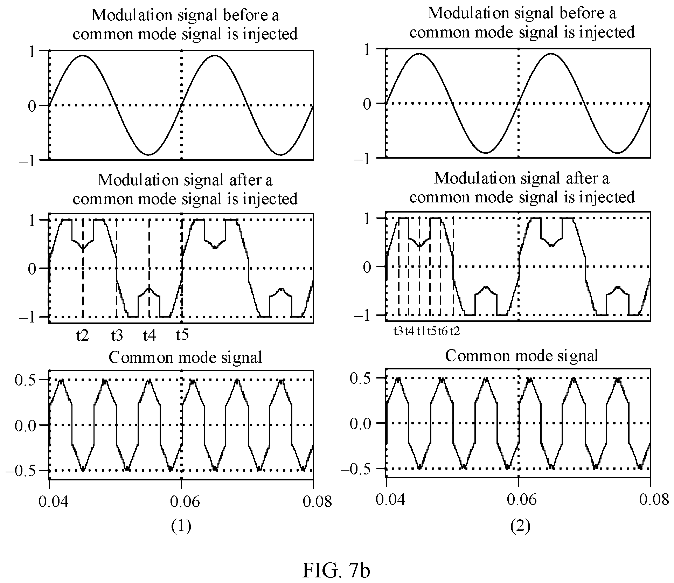

It may be understood that, referring to FIG. 7b, DPWM control may also be performed when the modulation signal is small. When the modulation signal of the main bridge arm is small, that is, when the modulation signal of the main bridge arm is less than 1, for example, when the modulus value of the modulation signal is 0.2 to 0.5, DPWM modulation may also be implemented by injecting a co-directional common mode signal.

Refer to FIG. 7a and FIG. 7b. DPWM modulation may appear at a "peak" of an original main bridge arm modulation signal. This modulation manner in which DPWM modulation is performed at the "peak" is referred to as a DPWM1 mode hereinafter. Certainly, DPWM modulation may also occur on two sides of the "peak" of the original main bridge arm modulation signal. This modulation manner in which DPWM modulation is performed on two sides of the "peak" is referred to as a DPWM2 mode hereinafter.

It should be understood that a modulus value of the common mode signal injected in the DPWM1 mode is small, and efficiency is high. However, when a modulation signal is large, a risk of loss of the modulation signal exists. In the DPWM2 mode, a modulus value of the injected common mode signal is large, but efficiency is low. When the modulation signal is small, a risk of common mode oscillation may occur. Therefore, bipolar modulation can be performed in the DPWM1 mode to avoid loss of the modulation signal, and unipolar modulation can be performed in the DPWM2 mode. Although the risk of common mode oscillation may still exist, unipolar modulation is more efficient than bipolar modulation. In this way, the main bridge arm of the inverter circuit 120 can operate in a discontinuous state as much as possible, thereby reducing a switching loss and improving efficiency.

In a possible implementation provided in this application, for example, in the DPWM1 mode, when an absolute value of an instantaneous value of the modulation signal of the main bridge arm is greater than or equal to a first threshold, DPWM modulation is performed on the main bridge arm.

Specifically, refer to (1) in FIG. 7a. A main bridge arm modulation cycle starts from a moment t1, ends at a moment t5. A moment t3 is an intermediate moment of the main bridge arm modulation cycle. Between the moment t1 and the moment t3 or between the moment t3 and the moment t5, a modulation signal of the main bridge arm before the common mode is injected passes through a peak value, and after the common mode signal is added, the modulation signal of the main bridge arm remains 1 for a period of time. In this case, the switching transistor of the main bridge arm does not act, and is kept in an on state or an off state, so that a switching loss of the switching transistor of the main bridge arm can be reduced. During these two periods of time, an output voltage of the main bridge arm is clamped at a half of a voltage value of a direct current bus DC Bus. Lengths of the two periods of time may be the same, and are less than time of a 1/2 modulation cycle of the main bridge arm.

Further, refer to (2) in FIG. 7a. Time when the value of the modulation signal is 1 may be symmetrically distributed based on a 1/4 cycle moment of the modulation cycle. t1 is a 1/4 cycle moment of the main bridge arm modulation cycle, t2 is a 1/2 cycle moment of the main bridge arm modulation cycle, the period of time starts from t3 and ends at t4, t2>t4>t1>t3, and t4 minus t1 is equal to t1 minus t3. In other words, the moment t1 is located in the middle between the moment t2 and the moment t3, and this period of time is symmetrically distributed based on the 1/4 moment of the main bridge arm modulation cycle. Similarly, the time in which the modulation signal is 1 may also be symmetrically distributed based on a 3/4 cycle moment of the modulation cycle, and details are not described herein again.

In another possible implementation provided in this application, for example, in the DPWM2 mode, when an absolute value of an instantaneous value of the modulation signal of the main bridge arm is less than or equal to a second threshold and greater than or equal to a third threshold, DPWM modulation is performed on the main bridge arm. Because a modulation signal at a zero-crossing point is often difficult to accurately control, the third threshold herein is usually greater than 0.

Specifically, refer to (1) in FIG. 7b. One modulation cycle of the main bridge arm includes a moment starting from the moment t1 and ending at the moment t5. t2 is a 1/4 cycle moment of the main bridge arm modulation cycle, the moment t3 is an intermediate moment of the main bridge arm modulation cycle, and the moment t4 is a moment of a 3/4 cycle moment of the main bridge arm modulation cycle. The output voltage of the main bridge arm is clamped within a half of the voltage value of the direct current bus DC Bus, and a corresponding modulation signal of the main bridge arm before the common mode is injected does not pass through the peak value. Time in which the output voltage of the main bridge arm is clamped to a half of the voltage value of the direct current bus DC Bus may be between the moment t1 and the moment t2 and between the moment t2 and the moment t3, or is respectively located between the moment t1 and the moment t2, between the moment t2 and the moment t3, between the moment t3 and the moment t4, and between the moment t4 and the moment t5. In the time in which the output voltage of the main bridge arm is clamped to a half of the voltage value of the direct current bus DC Bus, the switching transistor of the main bridge arm does not operate, and remains in an on state or an off state, so that a switching loss of the switching transistor of the main bridge arm can be reduced.

Further, refer to (2) in FIG. 7b. The moment t1 is a 1/4 cycle moment of the main bridge arm modulation cycle, and the moment t2 is a 1/2 cycle moment of the main bridge arm modulation cycle. A period of time in which the output voltage of the main bridge arm is clamped at a half of the voltage value of the direct current bus DC Bus is two periods of time with same duration. A first period of time starts from the moment t3 and ends at the moment t4, and a second period of time starts from the moment t5 and ends at a moment t6. t2>t6>t5>t1>t4 >t3, t1 minus t4 is equal to t5 minus t1, and t4 minus t3 is equal to t6 minus t5. That is, duration of the two periods of time are equal, and are symmetrically distributed based on a 1/4 moment of the main bridge arm modulation cycle. Similarly, the two periods of time in which the modulation signal is 1 may also be symmetrically distributed based on a 3/4 cycle moment of the main bridge arm modulation cycle, and details are not described herein again.

It should be noted that, because a magnitude of the modulation signal is equal to a ratio of an alternating current output phase voltage to a half bus voltage, in actual application, the alternating current output phase voltage is usually set based on requirements of a power grid and a load and remains unchanged. In this scenario, a magnitude change state of the modulation signal may be directly observed by observing a change of the direct current bus voltage. A threshold condition of the modulation signal that is set in the foregoing embodiment may also be changed to that a threshold condition of the direct current bus voltage is set as a condition for switching between unipolar modulation and bipolar modulation. For example, when the direct current bus voltage is greater than a specified voltage threshold, it may be considered that the modulation signal is small, and unipolar modulation is used. When the direct current bus voltage is less than or equal to the specified voltage threshold, it may be considered that the modulation signal is large, and bipolar modulation is used.

Similarly, a magnitude of a modulation degree may also be used as a switching condition of unipolar modulation and bipolar modulation. The modulation degree is a value obtained by dividing a peak value of the alternating current output phase voltage by the half bus voltage. When the modulation degree is greater than a specified modulation degree threshold, it may be considered that the modulation signal is large, and bipolar modulation is used. When the modulation degree is less than or equal to the specified modulation degree threshold, it may be considered that the modulation signal is small, and unipolar modulation is used. Regardless of the magnitude of the modulation signal, the magnitude of the direct current bus voltage, or the magnitude of the modulation degree, whether to perform bipolar modulation or unipolar modulation is actually selected based on a magnitude of a modulus value of the common mode signal that needs to be injected. When the modulus value of the common mode signal that needs to be injected is large, unipolar modulation is used. When the modulus value of the common mode signal that needs to be injected is small, bipolar modulation is used. Under a balanced load condition, the common mode signal is a modulation signal of the bridge arm N. If the modulation signal of the bridge arm N is excessively small, the modulation signal of the bridge arm N is lost. Therefore, a three-phase alternating current output phase voltage is distorted, and a normal alternating current output phase voltage in a sine wave format cannot be output.

The foregoing embodiment describes a method for performing DPWM modulation on a main bridge arm of a three-phase four-bridge-arm inverter circuit under the balanced load. Under unbalanced load, DPWM modulation may be performed in a similar manner. However, under an unbalanced load, a zero sequence modulation signal is added to the bridge arm N. Under the unbalanced load, a value of a zero sequence voltage is equal to uₙ=1/3 (uₐ+u_{b}+u_{c}). Refer to FIG. 2a to FIG. 2c. uₐ is a voltage of a point a to a point n, u_{b} is a voltage of a point b to a point n, u_{c} is a voltage of the point c to the point n, and the zero sequence modulation signal is obtained through zero sequence voltage loop control. When DPWM modulation is performed on the main bridge arm, a common mode signal U_{Cmv} is injected into both the main bridge arm and the bridge arm N, and a modulation signal received by the bridge arm N is Uₛₙ'=Uₙ'+U_{Cmv}. Because the load is the unbalanced load, uₙ=1/3 (uₐ+u_{b}+u_{c}) ≠0, that is, Uₙ' ≠0. Even if the modulation signal of the main bridge arm is large, and the modulus value of the common mode signal U_{Cmv} is small, Uₛₙ'=Uₙ'+U_{Cmv} may also be sufficient to drive the switching transistor of the bridge arm N to perform a switching action, and a probability that the modulation signal of the bridge arm N is lost is low.

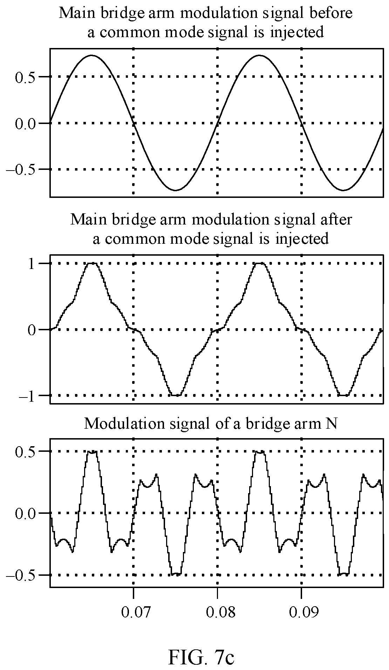

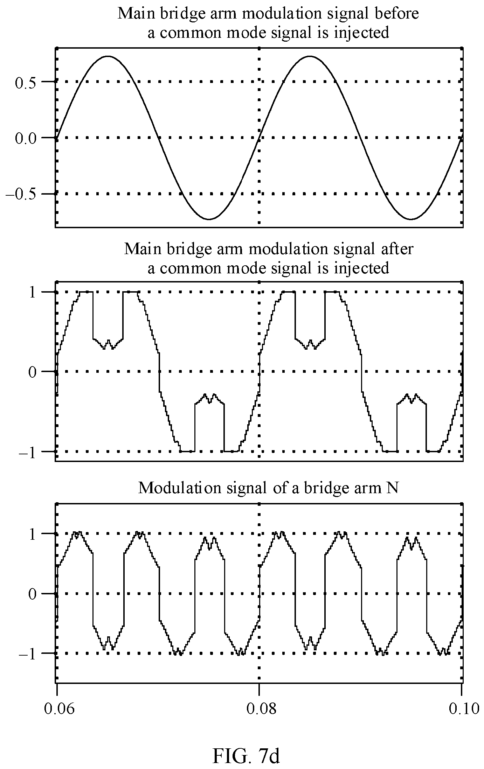

Refer to FIG. 7c and FIG. 7a. In comparison with the modulation signal of the bridge arm N in FIG. 7a, the common mode signal and the zero sequence modulation signal are superimposed on the modulation signal of the bridge arm N in FIG. 7c, a modulus value of the modulation signal of the bridge arm N increases, and a risk of modulation signal loss is low. The same applies to FIG. 7d and FIG. 7b. Therefore, under the unbalanced load, a switching condition of discontinuous control of the main bridge arm may be correspondingly adjusted, to better adapt to an operating condition under the unbalanced load.

In a possible implementation provided in this application, for example, in a case of the unbalanced load, a condition for enabling the main bridge arm to be in a discontinuous operating state is changed. In other words, a condition for entering the DPWM1 modulation state and the DPWM2 modulation state may change. For example, in the DPWM1 mode, DPWM modulation is performed on the main bridge arm when the absolute value of the instantaneous value of a modulation signal of the main bridge arm is greater than or equal to a first zero sequence threshold.

In another possible implementation provided in this application, for example, in the DPWM2 mode, when the absolute value of the instantaneous value of the modulation signal of the main bridge arm is less than or equal to a second zero sequence threshold and greater than or equal to a third zero sequence threshold, DPWM modulation is performed on the main bridge arm. Because it is difficult to accurately control a modulation signal at a zero-crossing point, the third zero sequence threshold herein is usually greater than 0.

It should be noted that, in a same modulation cycle, the absolute value of the instantaneous value of the modulation signal of the bridge arm N may be greater than the first effective modulus value in a first time period. In this case, the common mode signal is injected into the bridge arm N in the unipolar modulation manner in the first period of time. However, when the first effective modulus value is not equal to the second effective modulus value, after the first period of time, the absolute value of the instantaneous value of the modulation signal of the bridge arm N is not immediately less than the second effective modulus value. In this case, the common mode signal may continue to be injected into the bridge arm N in a unipolar common mode signal injection manner. Similarly, if in a third time period, the absolute value of the instantaneous value of the modulation signal of the bridge arm N is less than the second effective modulus value, the common mode signal is injected into the bridge arm N in the third time period in the bipolar modulation manner. However, after the third time period, the absolute value of the instantaneous value of the modulation signal of the bridge arm N is not immediately greater than the first effective modulus value. In this case, the common mode signal may continue to be injected into the bridge arm N in a bipolar common mode signal injection manner. In this way, switching of the common mode injection manner can be reduced, control logic can be simplified, and control continuity can be better. This control manner may be referred to as "hysteresis control."

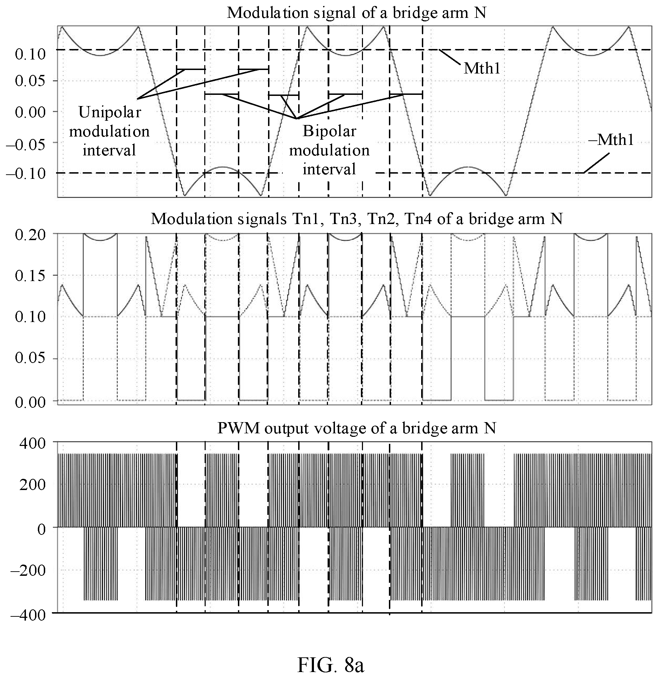

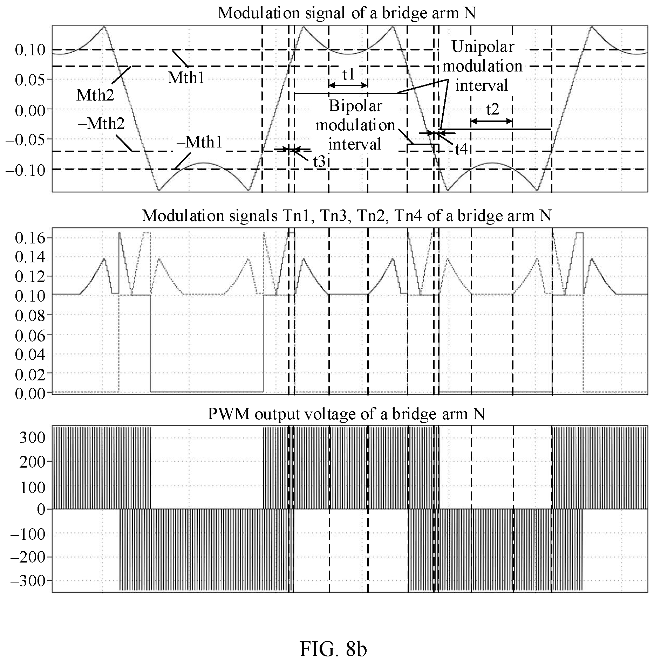

FIG. 8a and FIG. 8b are two different schematic diagrams of hysteresis control according to an embodiment of this application.

In a possible implementation provided in this application, as shown in FIG. 8a, the first effective modulus value is equal to the second effective modulus value. In this case, the switching condition has only one first effective modulus value Mth1. When the absolute value of the instantaneous value of the modulation signal of the bridge arm N is greater than a first effective modulus value Mth1, the unipolar modulation manner is used. When the absolute value of the instantaneous value of the modulation signal of the bridge arm N decreases to be less than the first effective modulus value Mth1, the bipolar modulation manner is directly used.

In another possible implementation provided in this application, the first effective modulus value is not equal to the second effective modulus value. Refer to FIG. 8b. In this case, the switching condition has the first effective modulus value Mth1 and a second effective modulus value Mth2, and hysteresis control exists. When the absolute value of the instantaneous value of the modulation signal of the bridge arm N is greater than the first effective modulus value Mth1, the unipolar modulation manner is directly used. When the absolute value of the instantaneous value of the modulation signal of the bridge arm N decreases to be less than the second effective modulus value Mth2, the bipolar modulation manner is directly used. When the absolute value of the instantaneous value of the modulation signal of the bridge arm N decreases from being greater than the first effective modulus value Mth1 to being less than the first effective modulus value Mth1 and then greater than the second effective modulus value Mth2, a previous modulation manner may be maintained, to avoid switching between modulation manners. For example, in an interval between t1 and t2, because the unipolar modulation manner is used in a previous period of time, in a next adjacent period of time, the absolute value of the instantaneous value of the modulation signal of the bridge arm N is less than the first effective modulus value Mth1 and greater than the second effective modulus value Mth2, and the unipolar modulation manner continues to be maintained. Hysteresis control of bipolarity is similar. For example, in an interval between t3 and t4, because the bipolar modulation manner is used in a previous period of time, in a next adjacent period of time, the absolute value of the instantaneous value of the modulation signal of the bridge arm N is less than the first effective modulus value Mth1 and greater than the second effective modulus value Mth2, and the bipolar modulation manner continues to be maintained.

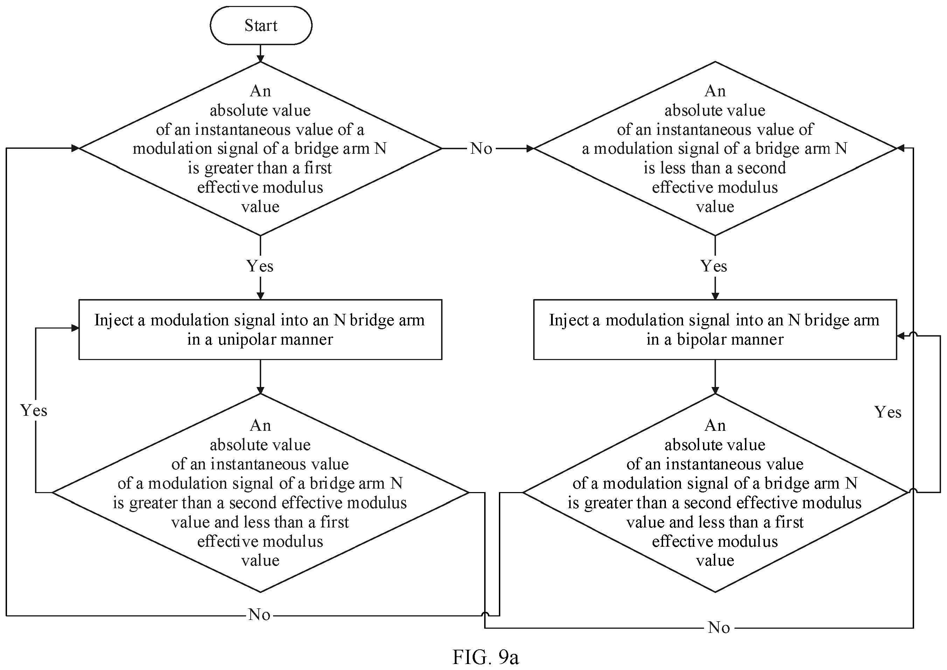

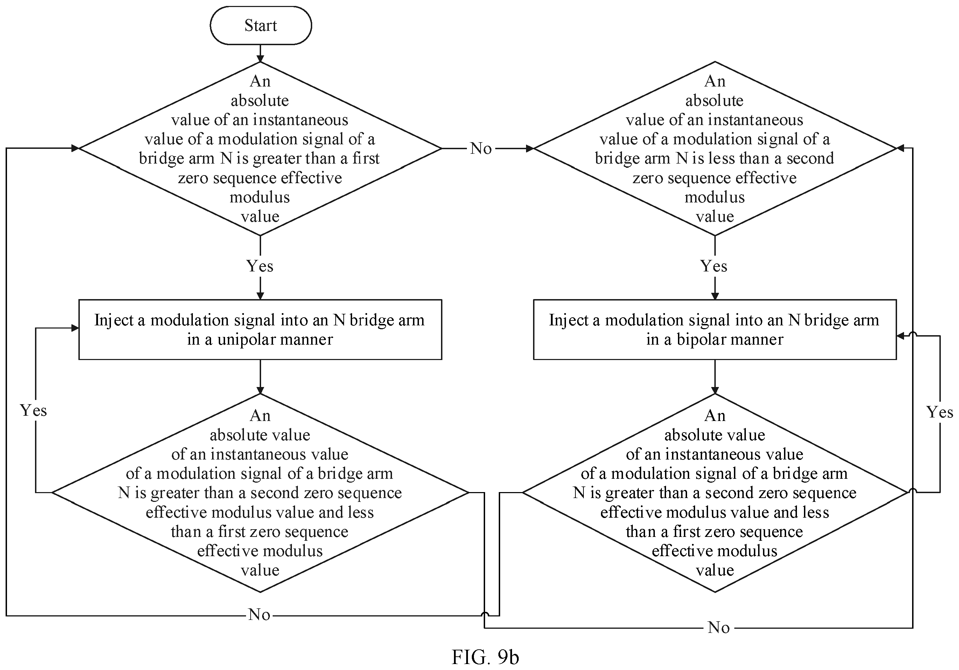

According to a three-phase four-bridge-arm inverter circuit control method further provided in embodiments of this application, a control manner is properly adjusted by adjusting a PWM modulation manner of the bridge arm N, so that a loss is reduced in various scenarios, and it can be ensured that an output voltage of the bridge arm N is effectively controlled. This avoids impact of a dead zone and a narrow pulse on a low modulation signal, thereby improving quality of electric energy output by a power converter. A specific control manner is similar to the control manner performed by the controller in the foregoing embodiments. Refer to FIG. 9a and FIG. 9b. Details are not described herein again.

The foregoing disclosed preferred embodiments of this application are merely intended to help describe this application. Preferred embodiments do not describe all details in detail, and this application is not limited to the specific implementations. Apparently, many modifications and changes may be made according to the content of embodiments of this application. These embodiments are selected and described in detail in this application, to better explain the principle and actual application of this application, so that a person skilled in the art can well understand and use this application. This application is limited only by the claims and their full scope and equivalents.

In the foregoing embodiment, several methods for performing modulation on a bridge arm N in the three-phase four-bridge-arm inverter circuit by using unipolar/bipolar modulation switching are described. A difference between the several modulation modes mainly lies in different switching conditions of unipolar/bipolar modulation, including: (1) A value of an absolute value of an instantaneous value of a modulation signal of the bridge arm Ns is used as a modulation condition; (2) a magnitude of a modulation degree is used as a switching condition; and (3) a magnitude of a direct current bus voltage is used as a switching condition.

A modulation mode in which the absolute value of the instantaneous value of the modulation signal of the bridge arm N is used as the modulation condition may be referred to as unipolar/bipolar hybrid modulation. This is because in this modulation mode, unipolar modulation and bipolar modulation usually coexist in a same modulation cycle. As shown in FIG. 8a and FIG. 8b, in a same modulation cycle, there is both a unipolar modulation interval and a bipolar modulation interval.

A modulation mode in which the magnitude of the modulation degree or the magnitude of the direct current bus voltage is used as the unipolar/bipolar modulation switching condition may be referred to as unipolar/bipolar switching modulation. In this modulation mode, in a same period or a plurality of consecutive modulation cycles, only unipolar modulation or only bipolar modulation generally exists.

It should be understood that the following describes again a specific implementation of a modulation mode in which the magnitude of the modulation degree or the magnitude of the direct current bus voltage is used as the unipolar/bipolar modulation switching condition. When the magnitude of the modulation degree is used as the unipolar/bipolar modulation switching condition, the magnitude of the modulation degree needs to be determined. The magnitude of the modulation degree is obtained by dividing a peak value of an alternating current output phase voltage by a value of a half of the bus voltage. When the modulation degree is greater than a specified modulation degree threshold, it may be considered that the modulation signal is large. In this case, the common mode signal that needs to be injected is small, the modulation signal of the bridge arm N is small, and bipolar modulation is used. When the modulation degree is less than or equal to the specified modulation degree threshold, it may be considered that the modulation signal is small. In this case, the common mode signal that needs to be injected is large, the modulation signal of the bridge arm N is large, and unipolar modulation is used.

It may be noted that there is a fixed value in an algorithm for adjusting the magnitude of the modulation degree, that is, an output voltage of the three-phase four-bridge-arm inverter circuit. The output voltage of the three-phase four-bridge-arm inverter circuit is generally kept consistent with a power grid voltage, and the power grid voltage is generally stable. Therefore, in actual application, a magnitude of the modulation degree is determined only by the direct current bus voltage. Based on the foregoing analysis, using the magnitude of the modulation degree as the switching condition and using the magnitude of the direct current bus voltage as the switching condition are actually a same modulation mode.

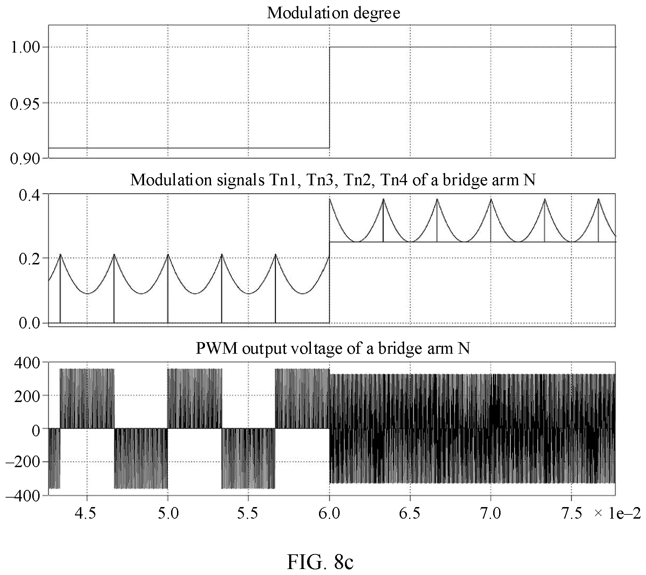

In a modulation mode in which the magnitude of the modulation degree is used as the switching condition or the magnitude of the direct current bus voltage is used as the switching condition, the direct current bus voltage is usually determined by an input voltage of a direct current input source such as an energy storage battery or a photovoltaic module. However, input voltages of these direct current sources usually remain relatively stable in a period of time, and do not fluctuate significantly in an instant. In other words, the modulation degree of the three-phase four-bridge-arm inverter circuit usually remains unchanged in a period of time. Therefore, refer to FIG. 8c. In the modulation mode in which the magnitude of the modulation degree is used as the switching condition or the magnitude of the direct current bus voltage is used as the switching condition, in an interval in which the modulation degree is large, that is, when the modulation degree of the three-phase four-bridge-arm inverter circuit is greater than the first switching threshold, the modulation signal is injected into the bridge arm N in the bipolar manner, and the modulation signal is injected into the bridge arm N in the unipolar manner in an interval with a small modulation degree, that is, when the modulation degree of the three-phase four-bridge-arm inverter circuit is less than the second switching threshold. The first switching threshold is greater than or equal to the second switching threshold.

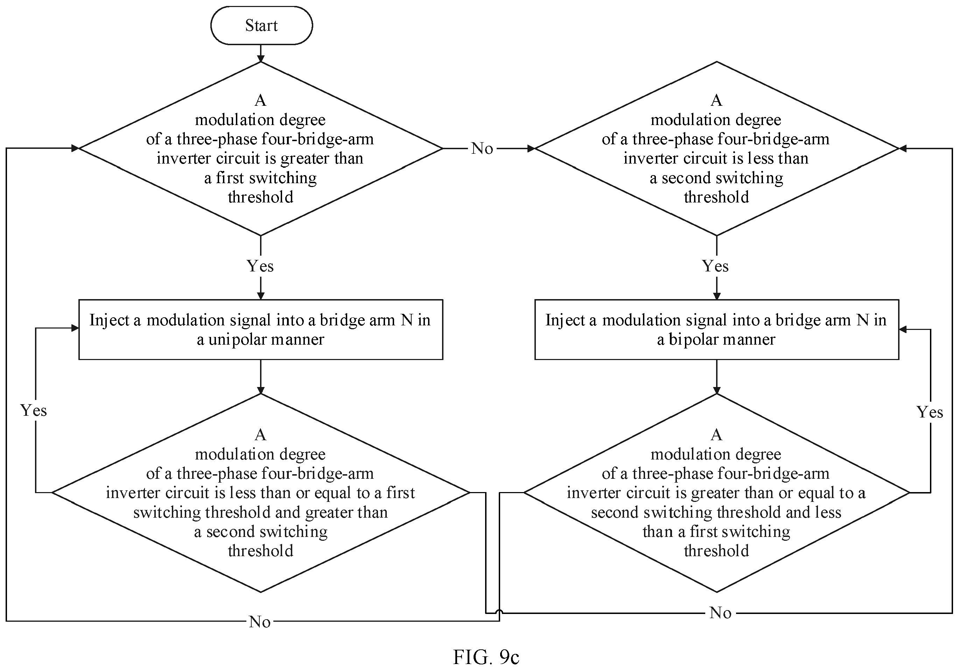

In an implementation, to prevent the modulation mode from being switched due to slight fluctuation, the first switching threshold is set to be greater than the second switching threshold. There is an interval between the first switching threshold and the second switching threshold, and the interval may be referred to as a hysteresis interval. Hysteresis control may be performed in the hysteresis interval. For example, when the modulation degree of the three-phase four-bridge-arm inverter circuit changes from being greater than the first switching threshold to being greater than the second switching threshold and less than or equal to the first switching threshold, the modulation signal is injected into the bridge arm N in the unipolar manner. When the modulation degree of the three-phase four-bridge-arm inverter circuit changes from being less than the second switching threshold to being greater than or equal to the second switching threshold and less than the first switching threshold, the modulation signal is injected into the bridge arm N in the bipolar manner. For a specific control mode, refer to FIG. 9c.

It should be understood that, regardless of the magnitude of the modulation signal, the magnitude of the direct current bus voltage, or the magnitude of the modulation degree, whether to perform bipolar modulation or unipolar modulation is actually selected based on a magnitude of a modulus value of the common mode signal that needs to be injected. When the modulus value of the common mode signal that needs to be injected is large, unipolar modulation is used. When the modulus value of the common mode signal that needs to be injected is small, bipolar modulation is used. Under a balanced load condition, the common mode signal is a modulation signal of the bridge arm N. If the modulation signal of the bridge arm N is excessively small, the modulation signal of the bridge arm N is lost. Therefore, a three-phase alternating current output phase voltage is distorted, and a normal alternating current output phase voltage in a sine wave format cannot be output.

The foregoing disclosed preferred embodiments of this application are merely intended to help describe this application. Preferred embodiments do not describe all details in detail, and this application is not limited to the specific implementations. Apparently, many modifications and changes may be made according to the content of embodiments of this application. These embodiments are selected and described in detail in this application, to better explain the principle and actual application of this application, so that a person skilled in the art can well understand and use this application. This application is limited only by the claims and their full scope and equivalents.

## Claims

1. A power converter, comprising a three-phase four-bridge-arm inverter circuit and a controller, wherein an input end of the three-phase four-bridge-arm inverter circuit is configured to connect to a direct current input, and an output end of the three-phase four-bridge-arm inverter circuit is configured to connect to a load;
the three-phase four-bridge-arm inverter circuit comprises three main bridge arms and a bridge arm N;
the controller is configured to inject a common mode signal into the main bridge arm and the bridge arm N, so that a bridge arm output voltage of the main bridge arm is clamped at a half of a direct current bus voltage in a period of time in a main bridge arm modulation cycle; and
the controller is further configured to: when an absolute value of an instantaneous value of a modulation signal of the bridge arm N is greater than a first effective modulus value, inject a modulation signal into the bridge arm N in a unipolar manner; or when an absolute value of an instantaneous value of a modulation signal of the bridge arm N is less than a second effective modulus value, inject a modulation signal into the bridge arm N in a bipolar manner, wherein the first effective modulus value is greater than or equal to the second effective modulus value; or
the controller is further configured to: when a modulation degree of the three-phase four-bridge-arm inverter circuit is greater than a first switching threshold, inject a modulation signal into the bridge arm N in a bipolar manner; or when a modulation degree of the three-phase four-bridge-arm inverter circuit is less than a second switching threshold, inject a modulation signal into the bridge arm N in a unipolar manner, wherein the first switching threshold is greater than or equal to the second switching threshold.

2. The power converter according to claim 1, wherein the injecting a modulation signal into the bridge arm N in a unipolar manner refers to: controlling a level output by the bridge arm N to change only between a positive level and a zero level in a half modulation cycle; or controlling a level output by the bridge arm N to change only between a negative level and a zero level in a half modulation cycle; and
the injecting a modulation signal into the bridge arm N in a bipolar manner refers to: controlling a level output by the bridge arm N to change between the positive level, the negative level, and the zero level in a half modulation cycle.

3. The power converter according to claim 1 or 2, wherein the controller is configured to inject the common mode signal into the main bridge arm and the bridge arm N, so that the main bridge arm operates in a discontinuous state when an absolute value of an instantaneous value of a modulation signal of the main bridge arm is greater than or equal to a first threshold.

4. The power converter according to any one of claims 1 to 3, wherein the controller is configured to inject the common mode signal into the main bridge arm and the bridge arm N, so that the bridge arm output voltage of the main bridge arm is clamped at a half of the direct current bus voltage in the period of time in the main bridge arm modulation cycle when the absolute value of the instantaneous value of the modulation signal of the main bridge arm is less than or equal to a second threshold and greater than or equal to a third threshold, the second threshold is less than the first threshold, and the third threshold is greater than 0 and less than the second threshold.

5. The power converter according to claim 1 or 2, wherein the controller is configured to: when the load is an unbalanced load, inject a zero sequence modulation signal into the bridge arm N; and
the controller is configured to inject the common mode signal into the main bridge arm and the bridge arm N, so that the bridge arm output voltage of the main bridge arm is clamped at a half of the direct current bus voltage in a period of time in the main bridge arm modulation cycle when the absolute value of the instantaneous value of the modulation signal of the main bridge arm is greater than a first zero sequence threshold.

6. The power converter according to claim 1, 2, or 5, wherein the controller is configured to inject the common mode signal into the main bridge arm and the bridge arm N, so that the bridge arm output voltage of the main bridge arm is clamped at a half of the direct current bus voltage in the period of time in the main bridge arm modulation cycle when the absolute value of the instantaneous value of the modulation signal of the main bridge arm is less than or equal to a second zero sequence threshold and greater than or equal to a third zero sequence threshold, the second zero sequence threshold is less than the first zero sequence threshold, and the third zero sequence threshold is greater than 0 and less than the second zero sequence threshold.

7. The power converter according to any one of claims 1 to 6, wherein the main bridge arm modulation cycle comprises a moment t1, a moment t3, and a moment t5, t1 is a start moment of the main bridge arm modulation cycle, t5 is an end moment of the main bridge arm modulation cycle, and t3 is an intermediate moment of the main bridge arm modulation cycle; and
the period of time is between the moment t1 and the moment t3, or between the moment t3 and the moment t5; or are two same periods of time that are respectively between the moment t1 and the moment t3 and between the moment t3 and the moment t5.

8. The power converter according to any one of claims 1 to 6, wherein the main bridge arm modulation cycle comprises a moment t1 and a moment t2, the moment t1 is a 1/4 cycle moment of the main bridge arm modulation cycle, the moment t2 is a 1/2 cycle moment of the main bridge arm modulation cycle, the period of time starts from a moment t3 and ends at a moment t4, t2>t4>t1>t3, and t4 minus t1 is equal to t1 minus t3.

9. The power converter according to any one of claims 1 to 6, wherein the main bridge arm modulation cycle comprises a moment t1, a moment t2, a moment t3, a moment t4, and a moment t5, t1 is a start moment of the main bridge arm modulation cycle, t2 is a 1/4 cycle moment of the main bridge arm modulation cycle, the moment t3 is an intermediate moment of the main bridge arm modulation cycle, the moment t4 is a 3/4 cycle moment of the main bridge arm modulation cycle, and t5 is an end moment of the main bridge arm modulation cycle; and
the period of time is two same periods of time that are both between the moment t1 and the moment t2 and between the moment t2 and the moment t3, or are four same periods of time that are respectively between the moment t1 and the moment t2, between the moment t2 and the moment t3, between the moment t3 and the moment t4, and between the moment t4 and the moment t5.

10. The power converter according to any one of claims 1 to 6, wherein the main bridge arm modulation cycle comprises a moment t1 and a moment t2, the moment t1 is a 1/4 cycle moment of the main bridge arm modulation cycle, the moment t2 is a 1/2 cycle moment of the main bridge arm modulation cycle, the period of time is two periods of time with same duration, a first period of time starts from a moment t3 and ends at a moment t4, a second period of time starts from a moment t5 and ends at a moment t6, t2>t6>t5>t1>t4 >t3, t1 minus t4 is equal to t5 minus t1, and t4 minus t3 is equal to t6 minus t5.

11. The power converter according to any one of claims 1 to 10, wherein the first effective modulus value is greater than the second effective modulus value;
the controller is configured to: when the absolute value of the instantaneous value of the modulation signal of the bridge arm N is greater than or equal to the first effective modulus value in a first time period and is greater than the second effective modulus value and less than the first effective modulus value in an adjacent second time period, inject the modulation signal into the bridge arm N in the unipolar manner in the second time period, wherein the second time period is later than the first time period; or
the controller is configured to: when the absolute value of the instantaneous value of the modulation signal of the bridge arm N is less than the second effective modulus value in a third time period and is greater than the second effective modulus value and less than the first effective modulus value in an adjacent fourth time period, inject the modulation signal into the bridge arm N in the bipolar manner in the fourth time period, wherein the fourth time period is later than the third time period.

12. The power converter according to any one of claims 1 to 11, wherein the first switching threshold is greater than the second switching threshold, the controller is configured to: when the modulation degree of the three-phase four-bridge-arm inverter circuit changes from being greater than the first switching threshold to being greater than the second switching threshold and less than or equal to the first switching threshold, inject the modulation signal into the bridge arm N in the unipolar manner; or when the modulation degree of the three-phase four-bridge-arm inverter circuit changes from being less than the second switching threshold to being greater than or equal to the second switching threshold and less than the first switching threshold, inject the modulation signal into the bridge arm N in the bipolar manner.

13. A modulation method for a three-phase four-bridge-arm inverter circuit, wherein the method comprises:
injecting a common mode signal into a main bridge arm of the three-phase four-bridge-arm inverter circuit and a bridge arm N of the three-phase four-bridge-arm inverter circuit, so that a bridge arm output voltage of the main bridge arm is clamped at a half of a direct current bus voltage in a period of time in the main bridge arm modulation cycle; and
when an absolute value of an instantaneous value of a modulation signal of the bridge arm N is greater than a first effective modulus value, injecting a modulation signal into the bridge arm N in a unipolar manner; or when an absolute value of an instantaneous value of a modulation signal of the bridge arm N is less than a second effective modulus value, injecting a modulation signal into the bridge arm N in a bipolar manner; or
when a modulation degree of the three-phase four-bridge-arm inverter circuit is greater than a first switching threshold, injecting a modulation signal into the bridge arm N in a bipolar manner; or when a modulation degree of the three-phase four-bridge-arm inverter circuit is less than a second switching threshold, injecting a modulation signal into the bridge arm N in a unipolar manner, wherein the first switching threshold is greater than or equal to the second switching threshold.

14. The modulation method for the three-phase four-bridge-arm inverter circuit according to claim 13, wherein the injecting a modulation signal into the bridge arm N in a unipolar manner refers to: controlling a level output by the bridge arm N to change only between a positive level and a zero level in a half modulation cycle; or controlling a level output by the bridge arm N to change only between a negative level and a zero level in a half modulation cycle; and
the injecting a modulation signal into the bridge arm N in a bipolar manner refers to: controlling a level output by the bridge arm N to change between the positive level, the negative level, and the zero level in a half modulation cycle.

15. The modulation method for the three-phase four-bridge-arm inverter circuit according to claim 13 or 14, wherein the common mode signal is injected into the main bridge arm and the bridge arm N, so that the bridge arm output voltage of the main bridge arm is clamped at a half of the direct current bus voltage in a period of time in the main bridge arm modulation cycle when the absolute value of the instantaneous value of the modulation signal of the main bridge arm is greater than or equal to a first threshold.

16. The modulation method for the three-phase four-bridge-arm inverter circuit according to any one of claims 13 to 15, wherein the common mode signal is injected into the main bridge arm and the bridge arm N, so that the bridge arm output voltage of the main bridge arm is clamped at a half of the direct current bus voltage in the period of time in the main bridge arm modulation cycle when the absolute value of the instantaneous value of the modulation signal of the main bridge arm is less than or equal to a second threshold and greater than or equal to a third threshold, the second threshold is less than the first threshold, and the third threshold is greater than 0 and less than the second threshold.

17. The modulation method for the three-phase four-bridge-arm inverter circuit according to claim 13 or 14, wherein when a load of the three-phase four-bridge-arm inverter circuit is an unbalanced load, a zero sequence modulation signal is injected into the bridge arm N; and
the common mode signal is injected into the main bridge arm and the bridge arm N, so that the bridge arm output voltage of the main bridge arm is clamped at a half of the direct current bus voltage in a period of time in the main bridge arm modulation cycle when the absolute value of the instantaneous value of the modulation signal of the main bridge arm is greater than a first zero sequence threshold.

18. The modulation method for the three-phase four-bridge-arm inverter circuit according to claim 13, 14, or 17, wherein the common mode signal is injected into the main bridge arm and the bridge arm N, so that the bridge arm output voltage of the main bridge arm is clamped at a half of the direct current bus voltage in the period of time in the main bridge arm modulation cycle when the absolute value of the instantaneous value of the modulation signal of the main bridge arm is less than or equal to a second zero sequence threshold and greater than or equal to a third zero sequence threshold, the second zero sequence threshold is less than the first zero sequence threshold, the third zero sequence threshold is greater than 0 and less than the second zero sequence threshold, and the third zero sequence threshold is greater than 0 and less than the second zero sequence threshold.

19. The modulation method for the three-phase four-bridge-arm inverter circuit according to any one of claims 13 to 18, wherein the main bridge arm modulation cycle comprises a moment t1, a moment t3, and a moment t5, t1 is a start moment of the main bridge arm modulation cycle, t5 is an end moment of the main bridge arm modulation cycle, and t3 is an intermediate moment of the main bridge arm modulation cycle; and
the period of time is between the moment t1 and the moment t3, or between the moment t3 and the moment t5; or are two same periods of time that are respectively between the moment t1 and the moment t3 and between the moment t3 and the moment t5.

20. The modulation method for the three-phase four-bridge-arm inverter circuit according to any one of claims 13 to 18, wherein the main bridge arm modulation cycle comprises a moment t1 and a moment t2, the moment t1 is a 1/4 cycle moment of the main bridge arm modulation cycle, the moment t2 is a 1/2 cycle moment of the main bridge arm modulation cycle, the period of time starts from a moment t3 and ends at a moment t4, t2>t4>t1>t3, and t4 minus t1 is equal to t1 minus t3.

21. The modulation method for the three-phase four-bridge-arm inverter circuit according to any one of claims 13 to 18, wherein the main bridge arm modulation cycle comprises a moment t1, a moment t2, a moment t3, a moment t4, and a moment t5, t1 is a start moment of the main bridge arm modulation cycle, t2 is a 1/4 cycle moment of the main bridge arm modulation cycle, the moment t3 is an intermediate moment of the main bridge arm modulation cycle, the moment t4 is a 3/4 cycle moment of the main bridge arm modulation cycle, and t5 is an end moment of the main bridge arm modulation cycle; and
the period of time is two same periods of time that are both between the moment t1 and the moment t2 and between the moment t2 and the moment t3, or are four same periods of time that are respectively between the moment t1 and the moment t2, between the moment t2 and the moment t3, between the moment t3 and the moment t4, and between the moment t4 and the moment t5.

22. The modulation method for a three-phase four-bridge-arm inverter circuit according to any one of claims 13 to 18, wherein the main bridge arm modulation cycle comprises a moment t1 and a moment t2, the moment t1 is a 1/4 cycle moment of the main bridge arm modulation cycle, the moment t2 is a 1/2 cycle moment of the main bridge arm modulation cycle, the period of time is two periods of time with same duration, a first period of time starts from a moment t3 and ends at a moment t4, a second period of time starts from a moment t5 and ends at a moment t6, t2>t6>t5>t1>t4 >t3, t1 minus t4 is equal to t5 minus t1, and t4 minus t3 is equal to t6 minus t5.

23. The modulation method for the three-phase four-bridge-arm inverter circuit according to any one of claims 13 to 18, wherein the first effective modulus value is greater than the second effective modulus value;
when the absolute value of the instantaneous value of the modulation signal of the bridge arm N is greater than or equal to the first effective modulus value in a first time period and is greater than the second effective modulus value and less than the first effective modulus value in an adjacent second time period, the modulation signal is injected into the bridge arm N in the unipolar manner in the second time period, wherein the second time period is later than the first time period; or
when the absolute value of the instantaneous value of the modulation signal of the bridge arm N is less than the second effective modulus value in a third time period and is greater than the second effective modulus value and less than the first effective modulus value in an adjacent fourth time period, the modulation signal is injected into the bridge arm N in the bipolar manner in the fourth time period, wherein the fourth time period is later than the third time period.

24. The modulation method for the three-phase four-bridge-arm inverter circuit according to any one of claims 13 to 23, wherein the first switching threshold is greater than the second switching threshold, when the modulation degree of the three-phase four-bridge-arm inverter circuit changes from being greater than the first switching threshold to being greater than the second switching threshold and less than or equal to the first switching threshold, the modulation signal is injected into the bridge arm N in the unipolar manner; or when the modulation degree of the three-phase four-bridge-arm inverter circuit changes from being less than the second switching threshold to being greater than or equal to the second switching threshold and less than the first switching threshold, the modulation signal is injected into the bridge arm N in the bipolar manner.
